# EUROPEAN PATENT APPLICATION

(11) **EP 4 148 567 A1**
(43) Date of publication of application: **15.03.2023**
(21) Application number: 21817763.2
(22) Date of filing: 15.04.2021
(51) Int. Cl.: G06F 9/451

(54) **ADAPTIVE CARD GENERATION METHOD, TERMINAL DEVICE AND SERVER**

(30) Priority: 03.06.2020 CN 202010495049
(71) Applicant: Huawei Technologies Co., Ltd., Longgang Shenzhen, Guangdong 518129 (CN)
(72) Inventor: QIAO, Denglong, Shenzhen, Guangdong 518129 (CN); YE, Yun, Shenzhen, Guangdong 518129 (CN); GENG, Xianbei, Shenzhen, Guangdong 518129 (CN)
(74) Representative: Gill Jennings & Every LLP
(86) International application number: PCT/CN2021/087565
(87) International publication number: WO 2021/244154

(57) **Abstract**

This application provides a method for adaptively generating a card style and a terminal device. The terminal device may be a mobile phone, a tablet computer, a wearable device, a vehicle-mounted device, or the like. In the method, a plurality of sets of standard components and standard styles are provided based on a plurality of dimensions such as a terminal device type, a device version, and an operating system version. In a card development process, recompilation is performed based on a card source file and a differentiated style file, to generate cards of different styles. Alternatively, based on a card style caching mechanism, a card engine caches a target style file required by the device, then replaces an original style file with the target style file, and presents, to a user through recompilation and rendering, a card style that meets a current device and a system. The foregoing method can meet differentiated requirements of different devices on card styles, achieve objectives of one-time development and multi-terminal distribution, remove an obstacle to service ecosystem expansion, and improve flexibility of experience of the terminal device.

## Description

This application claims priority to Chinese Patent Application No. 202010495049.4, filed with the China National Intellectual Property Administration on June 3, 2020 and entitled "ADAPTIVE CARD GENERATION METHOD, TERMINAL DEVICE, AND SERVER", which is incorporated herein by reference in its entirety.

### TECHNICAL FIELD

This application relates to the field of electronic technologies, and in particular, to an adaptive card generation method, a terminal device, and a server.

### BACKGROUND

A card is a new service display technology, and is widely used on pan-terminal devices to display service content. For example, the card may be embedded in various super apps or interaction scenarios to better meet user requirements and provide smart service capabilities. In a current open ecosystem system, the card has been used as a service, and may be implemented based on a JavaScript (JS) technology. A developer develops the cards and releases the cards on a server, and the server manages and distributes the cards in a unified manner. For example, the server may include a HUAWEI Ability Gallery (HUAWEI Ability Gallery, HAG).

With upgrade of operating systems of various different terminal devices, card style specifications of different operating systems are frequently adjusted. After the card style specification is adjusted, the developer or a content provider (content provider, CP) needs to adjust a card style correspondingly, release the card again, and distribute the card to a user. In addition, styles of a same service card (for example, a weather card) on different terminal devices such as a mobile phone and a tablet computer or in different operating systems are different.

In a card development process, the CP needs to consider not only differentiated requirements of the different terminal devices and the different operating systems on the card styles, but also compatibility logic of the card styles in old and new operating systems. A current card style update mechanism restricts development of a card ecosystem, greatly increases difficulty of developing the card by the CP, reduces service efficiency, and increases difficulty of ecosystem promotion.

### SUMMARY

This application provides an adaptive card generation method, a terminal device, and a server. The method can meet differentiated requirements of different devices on card styles, achieve objectives of one-time development and multi-terminal distribution, remove an obstacle to service ecosystem expansion, and improve flexibility of terminal device experience.

According to a first aspect, a card generation method is provided, applied to a system including an electronic device and a server. The server stores a source file of one or more cards. The method includes: The electronic device sends a request message of a first card file to the server. The request message of the first card file includes identification information of a first card and parameter information of the electronic device. The server determines a source file of the first card based on the identification information of the first card, and determines a target style file from one or more card style files based on the parameter information of the electronic device. The server generates the first card file based on the source file of the first card and the target style file. The server sends the first card file to the electronic device. The electronic device displays the first card based on the first card file.

It should be understood that the server stores the source file of the one or more cards, the source file of the card is a UX file developed by a developer, and the first card file is a JS file obtained after the UX file is compiled. In this implementation process, the developer uploads the card source file (UX file) to the server for hosting. In other words, both the card source file (UX file) and a compiled card file can be uploaded to a server side.

In addition, this embodiment of this application provides an example of a card layout component for the developer. A standard specification of the example of the layout component specifies a plurality of standard components, for example, a container component, an image component, an image gallery component, a layout component, a tag component, a switch component, a button component, a search component, a list component, a text box component, and a rate component. For each component, a font type can be adjusted to be consistent with that in an operating system of a terminal device. Alternatively, a font size may be adjusted. For example, the font size and a font size in an operating system of a terminal device are adjusted at an equal proportion, or scaled down or scaled up at a specific proportion. Alternatively, mirror layout and rasterization processing may be performed on the card.

In addition, system maintenance personnel can develop a plurality of sets of style files based on a plurality of dimensions such as a device type, a device version, an operating system version, an application, an application version, and a component type, and upload the plurality of sets of style files to the server for storage and management. For example, this embodiment of this application provides an example of a card style for the developer, and the example of the card style provides a plurality of card styles for the developer. The plurality of sets of style files can provide a conversion capability for the card mirror layout and support unified update of each component style. After a component style is modified, all components that reference the style are changed to a new style in a unified manner. The card style can be adapted based on the operating system version.

In the foregoing process of generating the card file, the plurality of sets of style files are generated based on the card source file and based on the plurality of dimensions such as the terminal device type, the device version, the operating system version, the application, the application version, and the component type. Then, a plurality of sets of different card files are compiled from one card source file based on the card source file and the plurality of sets of style files and by using a recompilation mechanism. Each card file is applicable to the terminal devices with the different style requirements. In the process in which the user requests the card service, the different card distribution mechanisms are established for the same card service. The different card files can be distributed based on the requirements such as the terminal device type, the device version, the operating system version, the application, the application version, and the component type, to adapt to the different terminal devices.

The foregoing process may be understood as that, in a card development process, a plurality of sets of different style files are recompiled with reference to the card source file based on the card source file, to generate cards of different styles, so as to meet differentiated requirements of different terminal devices on card styles. In addition, in this process, a development burden and a task of a developer can be reduced. For different terminal devices, different card styles can be adapted in a card development phase, to achieve objectives of one-time development and multi-terminal distribution, remove an obstacle to service ecosystem expansion, and improve flexibility of terminal device experience.

With reference to the first aspect, in some implementations of the first aspect, when the electronic device detects an operation of invoking the first card by the user, the electronic device sends the request message of the first card file to the server; or when the electronic device matches a preset scenario, the electronic device sends the request message of the first card file to the server, and the preset scenario includes at least one of a to-be-completed trip of a user, a meeting arrangement, and an event reminder.

In a possible implementation, the terminal device may send an intent event to the server. Specifically, the intent event may include an active intent of the user and/or scenario information included in the card, and the like. The active intent of the user may be understood as that the user requests a card by using a specific operation. In this case, the terminal device may be triggered to send, to the server, a message for requesting a card file.

In another possible implementation, the intent may alternatively include uncompleted time information that the user currently has and that is automatically matched by the terminal device. For example, when the terminal device detects that the user has at least one of an uncompleted trip, a meeting arrangement, or an event reminder, the terminal device may be triggered to send, to the server, a message for requesting a card file.

Alternatively, the intent may be determined based on interaction between a plurality of applications installed on the terminal device. For example, when the user purchases an air ticket based on a flight status, flight information, for example, a trip of the user, is sent to the terminal device in a manner of an SMS message. After detecting related information, the terminal device notifies an intelligent scene application of the terminal device, to trigger the intelligent scene application to request a flight status card from the server, and finally display the flight status card on a leftmost screen for the user to view.

With reference to the first aspect and the foregoing implementations, in some implementations of the first aspect, the first card file includes a root component and one or more adaptation components. That the electronic device displays the first card based on the first card file includes: The root component obtains a style of a first application corresponding to the first card and a style of an operating system of the electronic device. The root component determines a component style rule of the root component based on the style of the first application and the style of the operating system of the electronic device. The component style rule includes at least one of a font, a font size, and a raster layout of the root component. The root component notifies the one or more adaptation components of the style of the first application and the style of the operating system of the electronic device. Each of the one or more adaptation components modifies a component style rule based on the style of the first application and the style of the operating system of the electronic device. The component style rule includes at least one of a font, a font size, and a raster layout of each adaptation component. The first card is displayed according to the component style rule of the root component and the component style rule of each of the one or more adaptation components.

For example, as a root component of all other adaptation components, the container component may listen to a change of a style of the operating system of the terminal device, and listen to an event that the user modifies a font, a landscape/portrait orientation change event of the terminal device, a foldable screen change event, a language environment change event of the terminal device, and the like. All changes that occur on the terminal device may be monitored and scheduled by the container component, and notified to another adaptation component in a message manner. The another adaptation component may listen to a message notification of the container component, and adjust styles of the another adaption component, for example, a font, a width, and the height, to adapt to the changes that occur on the terminal device, so as to be consistent with the operating system of the terminal device. Alternatively, a font size may be adjusted. For example, the font size and a font size of the operating system of the terminal device are adjusted at an equal proportion, or scaled down or scaled up at a specific proportion.

With reference to the first aspect and the foregoing implementations, in some implementations of the first aspect, the first card file includes the root component and the one or more adaptation components. When a state of the electronic device changes, the method further includes: The root component obtains a state change event of the electronic device. The state change event of the electronic device includes a system font change and/or a screen state change of the electronic device. The root component modifies the component style rule of the root component based on the state change event of the electronic device. The component style rule includes the at least one of the font, the font size, and the raster layout of the root component. The root component notifies the one or more adaptation components of the state change event of the electronic device. Each of the one or more adaptation components modifies the component style rule based on the state change event of the electronic device. The component style rule includes the at least one of the font, the font size, and the raster layout of each adaptation component.

For example, when a screen state of the terminal device changes, for example, a landscape mode change, a portrait mode change, a screen folding change, or a screen unfolding change, the standard component provided in this embodiment of this application may further automatically compress or expand the component according to a raster formula, to adjust an aspect ratio.

It should be understood that, in this embodiment of this application, the screen state of the terminal device may changes because the user makes a modification by using an entry, for example, a setting of a mobile phone. For example, the user sets that a mobile phone interface or the like is displayed in only a partial area on a large-screen mobile phone. Alternatively, the screen state of the terminal device may change spontaneously. For example, an acceleration sensor and a gravity sensor of a mobile phone detect that the mobile phone is flipped, to determine that a screen is switched between a landscape mode and a portrait mode. Alternatively, a screen state of a mobile phone with a foldable screen changes due to an unfolded state or a folded state of the mobile phone. A manner of changing the screen state of the terminal device is not limited in this embodiment of this application.

In a possible implementation, the foregoing listed components may be generally classified into a large size level, a medium size level, and a small size level, and each size level corresponds to a different component width and height. A plurality of different component styles may support different terminal devices, for example, "1+8+n" pan-terminal devices in the HUAWEI Seamless AI Life Strategy released by HUAWEI.

With reference to the first aspect and the foregoing implementations, in some implementations of the first aspect, the root component is a container component, and the adaptation component is one or more of an image component, an image gallery component, a layout component, a tag component, a switch component, a button component, a search component, a list component, a text box component, and a rate component.

By using the method described above, component standardization is performed on a plurality of components, and association adaptation between the card style and the style of the operating system can be implemented in a standard component. In a scenario in which the user modifies a system font or the card style, a font change of the terminal device is monitored by using a card engine, to synchronously modify a font of each component of the card engine, so as to synchronize the card style. In this process, a development burden and a task of the developer can be reduced. When the user manually modifies the system font, a process in which the developer continuously modifies styles of all components related to the card is avoided, and a problem that a card font is inconsistent with the system font or the like is avoided.

With reference to the first aspect and the foregoing implementations, in some implementations of the first aspect, the server stores one or more card style files. Each of the one or more card style files corresponds to at least one type of electronic device, and/or each of the one or more card style files corresponds to an electronic device of at least one version, and/or each of the one or more card style files corresponds to at least one operating system version, and/or each of the one or more card style files corresponds to at least one application version.

With reference to the first aspect and the foregoing implementations, in some implementations of the first aspect, the parameter information of the electronic device includes at least one of the following information: type information of the electronic device, version information of the electronic device, operating system version information of the electronic device, and application version information corresponding to a card service request.

In conclusion, in this solution, the plurality of sets of style files can be generated based on the card source file and based on the plurality of dimensions such as the terminal device type, the device version, the operating system version, the application, the application version, and the component type. Then, a plurality of sets of different card files can be compiled from one card source file based on the card source file and the plurality of sets of style files and by using the recompilation mechanism. Each card file is applicable to the terminal devices with the different style requirements. In the process in which the user requests the card service, the different card distribution mechanisms are established for the same card service. The different card files can be distributed based on the requirements such as the terminal device type, the device version, the operating system version, the application, the application version, and the component type, to adapt to the different terminal devices.

According to a second aspect, a card generation method is provided, applied to a system including an electronic device and a server. The method includes: The electronic device sends a request message of a first card file to the server. The request message of the first card file includes identification information of a first card and parameter information of the electronic device. The server determines the first card file based on identification information of the first card file, and the server determines a version of a target style file of the electronic device based on the parameter information of the electronic device. The server sends the first card file and version information of the target style file to the electronic device. The electronic device displays the first card based on the first card file and a first style file. The first style file is a style file stored in the electronic device.

It should be understood that, in this implementation process, system maintenance personnel can develop a plurality of sets of style files based on a plurality of dimensions such as a device type, a device version, an operating system version, an application, an application version, and a component type, and upload the plurality of sets of style files to the server for storage and management. In this process, only a compiled card file may be uploaded, and a card source file does not need to be hosted.

In the foregoing process of generating the card file, the plurality of sets of style files are generated based on the plurality of dimensions such as the terminal device type, the device version, the operating system version, the application, the application version, and the component type. Based on a card style caching mechanism, a card engine caches a target style file required by the device. If the corresponding target style file is not cached locally, the card engine can request to obtain the target style file from a HAG cloud side during card rendering. Then, the target style file is used to replace an original style file, and a card style that meets a current device and a system is presented to a user through recompilation and rendering. In this implementation process, the card engine can support the style file in being independent of the card file. During card loading, the target style file can be loaded to the card engine to replace an original style of the card and take effect.

It should be understood that the foregoing implementation process may be understood as dynamically loading, in a running process of the card, a style file that adapts to the current device and the system, and performing compilation, to meet differentiated requirements of different terminal devices on card styles. In addition, in this process, a development burden and a task of a developer can be reduced. For different terminal devices, different card styles can be adapted in a card development phase, to achieve objectives of one-time development and multi-terminal distribution, remove an obstacle to service ecosystem expansion, and improve flexibility of terminal device experience.

With reference to the second aspect, in some implementations of the second aspect, the method further includes: The electronic device sends, to the server, a second request message used to request to update the first style file. The server sends a second style file to the electronic device based on the second request message. The electronic device stores the second style file.

With reference to the second aspect and the foregoing implementations, in some implementations of the second aspect, that the electronic device sends, to the server, a second request message used to request to update the first style file includes: The electronic device periodically sends, to the server, the second request message used to request to update the first style file.

In a specific implementation process, when a terminal device invokes the card engine to render the card file, recompilation is performed based on a target card file currently obtained from the server and a locally cached style file, a style module in the target card file is replaced with the locally cached style file, and the card is displayed to the user after recompilation.

It should be understood that the foregoing process of synchronously updating the style files of the terminal device and the server can be periodically performed. For example, the terminal device actively updates the style file with the server twice every month, and the terminal device can update the locally cached style file accordingly, so that when the terminal device requests a card service next time, a target card file obtained from the server and a latest locally cached style file are used for recompilation. Alternatively, the synchronous update process may be performed each time a quantity of times that the terminal device requests the card service from the server reaches 50. This is not limited in this embodiment of this application.

In conclusion, the style files of the terminal device are all obtained from a local cache. In addition, the locally cached style file can be updated at a specific frequency, and synchronized with that in the server. In this process, a quantity of times that the server sends the style file to the terminal device can be reduced, to reduce a delay. In addition, the target card file obtained from the server and the locally cached style file are first used to recompile and render the card, and then, if the style file is updated, recompile and render the card with reference to the target card file and a latest style file. This process can be implemented without user perception, and matching of a latest card style is implemented without user interaction, to improve user experience. With reference to the second aspect and the foregoing implementations, in some implementations of the second aspect, when the electronic device detects an operation of invoking the first card by the user, the electronic device sends the request message of the first card file to the server, or when the electronic device matches a preset scenario, the electronic device sends the request message of the first card file to the server, and the preset scenario includes at least one of a to-be-completed trip of a user, a meeting arrangement, and an event reminder.

With reference to the second aspect and the foregoing implementations, in some implementations of the second aspect, the first card file is a JS file, and the JS file includes a template part, a style part, and a script part. That the electronic device displays the first card based on the first card file and a first style file includes: The electronic device replaces the style part in the first card file by using the first style file, to obtain a second card file through compilation. The electronic device displays the first card based on the second card file.

With reference to the second aspect and the foregoing implementations, in some implementations of the second aspect, the second card file includes a root component and one or more adaptation components. That the electronic device displays the first card based on the second card file includes: The root component obtains a style of a first application corresponding to the first card and a style of an operating system of the electronic device. The root component determines a component style rule of the root component based on the style of the first application and the style of the operating system of the electronic device. The component style rule includes at least one of a font, a font size, and a raster layout of the root component. The root component notifies the one or more adaptation components of the style of the first application and the style of the operating system of the electronic device. Each of the one or more adaptation components modifies a component style rule based on the style of the first application and the style of the operating system of the electronic device. The component style rule includes at least one of a font, a font size, and a raster layout of each adaptation component. The first card is displayed according to the component style rule of the root component and the component style rule of each of the one or more adaptation components.

With reference to the second aspect and the foregoing implementations, in some implementations of the second aspect, the second card file includes the root component and the one or more adaptation components. When a state of the electronic device changes, the method further includes: The root component obtains a state change event of the electronic device. The state change event of the electronic device includes a system font change and/or a screen state change of the electronic device. The root component modifies the component style rule of the root component based on the state change event of the electronic device. The component style rule includes the at least one of the font, the font size, and the raster layout of the root component. The root component notifies the one or more adaptation components of the state change event of the electronic device. Each of the one or more adaptation components modifies the component style rule based on the state change event of the electronic device. The component style rule includes the at least one of the font, the font size, and the raster layout of each adaptation component.

With reference to the second aspect and the foregoing implementations, in some implementations of the second aspect, the root component is a container component, and the adaptation component is one or more of an image component, an image gallery component, a layout component, a tag component, a switch component, a button component, a search component, a list component, a text box component, and a rate component.

With reference to the second aspect and the foregoing implementations, in some implementations of the second aspect, the server stores one or more card style files. Each of the one or more card style files corresponds to at least one type of electronic device, and/or each of the one or more card style files corresponds to an electronic device of at least one version, and/or each of the one or more card style files corresponds to at least one operating system version, and/or each of the one or more card style files corresponds to at least one application version.

With reference to the second aspect and the foregoing implementations, in some implementations of the second aspect, the parameter information of the electronic device includes at least one of the following information: type information of the electronic device, version information of the electronic device, operating system version information of the electronic device, and application version information corresponding to a card service request.

According to a third aspect, a card generation method is provided, applied to a system including a first electronic device, a second electronic device, and a server. The first electronic device and the second electronic device are of different types, and the server stores a source file of a first card. The method includes: The first electronic device sends a first request message of a first card file to the server. The first request message includes identification information of the first card and parameter information of the first electronic device. The second electronic device sends a second request message of the first card file to the server. The first request message includes the identification information of the first card and parameter information of the second electronic device. The server determines the source file of the first card based on the identification information of the first card, determines a first target style file from one or more card style files based on the parameter information of the first electronic device, and determines a second target style file from one or more card style files based on the parameter information of the second electronic device. The server generates the first card file based on the source file of the first card and the first target style file, and sends the first card file to the first electronic device. The server generates a second card file based on the source file of the first card and the second target style file, and sends the second card file to the second electronic device. The first electronic device displays, based on the first card file, the first card having a first style, and the second electronic device displays, based on the second card file, the first card having a second style.

With reference to the third aspect and the foregoing implementations, in some implementations of the third aspect, the first style and the second style are the same or different.

With reference to the third aspect and the foregoing implementations, in some implementations of the third aspect, a display area of the first card having the first style includes one or more of a title area, a content area, an operation area, and a statement area, and a display area of the first card having the second style includes one or more of a title area, a content area, an operation area, and a statement area.

With reference to the third aspect and the foregoing implementations, in some implementations of the third aspect, when detecting an operation of invoking the first card by a user, the first electronic device sends the first request message of the first card file to the server. Alternatively, when identifying a preset scenario, the first electronic device sends the first request message of the first card file to the server. The preset scenario includes at least one of a to-be-completed trip of a user, a meeting arrangement, and an event reminder. When detecting the operation of invoking the first card by the user, the second electronic device sends the second request message of the first card file to the server. Alternatively, when identifying the preset scenario, the second electronic device sends the second request message of the first card file to the server. The preset scenario includes the at least one of the to-be-completed trip of the user, the meeting arrangement, and the event reminder.

With reference to the third aspect and the foregoing implementations, in some implementations of the third aspect, the server stores one or more card style files. Each of the one or more card style files corresponds to at least one type of electronic device, and/or each of the one or more card style files corresponds to an electronic device of at least one version, and/or each of the one or more card style files corresponds to at least one operating system version, and/or each of the one or more card style files corresponds to at least one application version.

With reference to the third aspect and the foregoing implementations, in some implementations of the third aspect, the source file of the first card is a UX file, and the first card file is a JS file obtained after the UX file and the target style file are compiled.

With reference to the third aspect and the foregoing implementations, in some implementations of the third aspect, the parameter information of the first electronic device includes at least one of the following information: type information of the first electronic device, version information of the first electronic device, operating system version information of the first electronic device, and application version information corresponding to a card service request, and the parameter information of the second electronic device includes at least one of the following information: type information of the second electronic device, version information of the second electronic device, operating system version information of the second electronic device, and the application version information corresponding to the card service request.

According to a fourth aspect, an electronic device is provided. The electronic device is configured to: send a request message of a first card file to a server, where the request message of the first card file includes identification information of a first card and parameter information of the electronic device; receive the first card file sent by the server, where the first card file is generated by the server based on a source file of the first card and a target style file, the source file of the first card is determined by the server based on the identification information of the first card, and the target style file is determined by the server from one or more card style files based on the parameter information of the electronic device; and display the first card based on the first card file.

With reference to the fourth aspect, in some implementations of the fourth aspect, when the electronic device detects an operation of invoking the first card by a user, the electronic device sends the request message of the first card file to the server, or when matching a preset scenario, the electronic device sends the request message of the first card file to the server, and the preset scenario includes at least one of a to-be-completed trip of a user, a meeting arrangement, and an event reminder.

With reference to the fourth aspect and the foregoing implementations, in some implementations of the fourth aspect, the first card file includes a root component and one or more adaptation components. That the electronic device displays the first card based on the first card file includes: The root component obtains a style of a first application corresponding to the first card and a style of an operating system of the electronic device. The root component determines a component style rule of the root component based on the style of the first application and the style of the operating system of the electronic device. The component style rule includes at least one of a font, a font size, and a raster layout of the root component. The root component notifies the one or more adaptation components of the style of the first application and the style of the operating system of the electronic device. Each of the one or more adaptation components modifies a component style rule based on the style of the first application and the style of the operating system of the electronic device. The component style rule includes at least one of a font, a font size, and a raster layout of each adaptation component. The first card is displayed according to the component style rule of the root component and the component style rule of each of the one or more adaptation components.

With reference to the fourth aspect and the foregoing implementations, in some implementations of the fourth aspect, the first card file includes the root component and the one or more adaptation components. When a state of the electronic device changes, the root component obtains a state change event of the electronic device. The state change event of the electronic device includes a system font change and/or a screen state change of the electronic device. The root component modifies the component style rule of the root component based on the state change event of the electronic device. The component style rule includes the at least one of the font, the font size, and the raster layout of the root component. The root component notifies the one or more adaptation components of the state change event of the electronic device. Each of the one or more adaptation components modifies the component style rule based on the state change event of the electronic device. The component style rule includes the at least one of the font, the font size, and the raster layout of each adaptation component.

With reference to the fourth aspect and the foregoing implementations, in some implementations of the fourth aspect, the root component is a container component, and the adaptation component is one or more of an image component, an image gallery component, a layout component, a tag component, a switch component, a button component, a search component, a list component, a text box component, and a rate component.

With reference to the fourth aspect and the foregoing implementations, in some implementations of the fourth aspect, the source file of the card is a UX file, and the first card file is a JS file obtained after the UX file and the target style file are compiled.

With reference to the fourth aspect and the foregoing implementations, in some implementations of the fourth aspect, the parameter information of the electronic device includes at least one of the following information: type information of the electronic device, version information of the electronic device, operating system version information of the electronic device, and application version information corresponding to a card service request.

According to a fifth aspect, an electronic device is provided. The electronic device is configured to: send a request message of a first card file to a server, where the request message of the first card file includes identification information of a first card and parameter information of the electronic device; and display the first card based on the first card file and a first style file, where the first style file is a style file stored in the electronic device, and the first card file is determined by the server based on identification information of the first card file.

With reference to the fifth aspect, in some implementations of the fifth aspect, the electronic device is further configured to: send, to the server, a second request message used to request to update the first style file; and receive a second style file sent by the server, and store the second style file.

With reference to the fifth aspect and the foregoing implementations, in some implementations of the fifth aspect, that the electronic device sends, to the server, a second request message used to request to update the first style file includes: The electronic device periodically sends, to the server, the second request message used to request to update the first style file.

With reference to the fifth aspect and the foregoing implementations, in some implementations of the fifth aspect, when the electronic device detects an operation of invoking the first card by a user, the electronic device sends the request message of the first card file to the server, or when the electronic device matches a preset scenario, the electronic device sends the request message of the first card file to the server, and the preset scenario includes at least one of a to-be-completed trip of a user, a meeting arrangement, and an event reminder.

With reference to the fifth aspect and the foregoing implementations, in some implementations of the fifth aspect, the first card file is a JS file, and the JS file includes a template part, a style part, and a script part. The electronic device is further configured to: replace the style part in the first card file by using the first style file, to obtain a second card file through compilation; and display the first card based on the second card file.

With reference to the fifth aspect and the foregoing implementations, in some implementations of the fifth aspect, the second card file includes a root component and one or more adaptation components. That the electronic device displays the first card based on the second card file includes: The root component obtains a style of a first application corresponding to the first card and a style of an operating system of the electronic device. The root component determines a component style rule of the root component based on the style of the first application and the style of the operating system of the electronic device. The component style rule includes at least one of a font, a font size, and a raster layout of the root component. The root component notifies the one or more adaptation components of the style of the first application and the style of the operating system of the electronic device. Each of the one or more adaptation components modifies a component style rule based on the style of the first application and the style of the operating system of the electronic device. The component style rule includes at least one of a font, a font size, and a raster layout of each adaptation component. The electronic device displays the first card according to the component style rule of the root component and the component style rule of each of the one or more adaptation components.

With reference to the fifth aspect and the foregoing implementations, in some implementations of the fifth aspect, the second card file includes the root component and the one or more adaptation components. When a state of the electronic device changes, the root component obtains a state change event of the electronic device. The state change event of the electronic device includes a system font change and/or a screen state change of the electronic device. The root component modifies the component style rule of the root component based on the state change event of the electronic device. The component style rule includes the at least one of the font, the font size, and the raster layout of the root component. The root component notifies the one or more adaptation components of the state change event of the electronic device. Each of the one or more adaptation components modifies the component style rule based on the state change event of the electronic device. The component style rule includes the at least one of the font, the font size, and the raster layout of each adaptation component.

With reference to the fifth aspect and the foregoing implementations, in some implementations of the fifth aspect, the root component is a container component, and the adaptation component is one or more of an image component, an image gallery component, a layout component, a tag component, a switch component, a button component, a search component, a list component, a text box component, and a rate component.

With reference to the fifth aspect and the foregoing implementations, in some implementations of the fifth aspect, the parameter information of the electronic device includes at least one of the following information: type information of the electronic device, version information of the electronic device, operating system version information of the electronic device, and application version information corresponding to a card service request.

According to a sixth aspect, a server is provided, including: a card management module, configured to store a source file of one or more cards; and a style management module, configured to store one or more card style files. The card management module is further configured to: receive a request message that is of a first card file and that is sent by an electronic device, where the request message of the first card file includes identification information of a first card and parameter information of the electronic device; determine a source file of the first card based on the identification information of the first card, and determine a target style file from the one or more card style files based on the parameter information of the electronic device; generate the first card file based on the source file of the first card and the target style file; and send the first card file to the electronic device.

With reference to the sixth aspect, in some implementations of the sixth aspect, each of the one or more card style files corresponds to at least one type of electronic device, and/or each of the one or more card style files corresponds to an electronic device of at least one version, and/or each of the one or more card style files corresponds to at least one operating system version, and/or each of the one or more card style files corresponds to at least one application version.

With reference to the sixth aspect and the foregoing implementations, in some implementations of the sixth aspect, the source file of the card is a UX file, and the first card file is a JS file obtained after the UX file and the target style file are compiled.

With reference to the sixth aspect and the foregoing implementations, in some implementations of the sixth aspect, the parameter information of the electronic device includes at least one of the following information: type information of the electronic device, version information of the electronic device, operating system version information of the electronic device, and application version information corresponding to a card service request.

According to a seventh aspect, a server is provided, including: a card management module, configured to store a source file of one or more cards; and a style management module, configured to store one or more card style files. The card management module is further configured to: receive a request message that is of a first card file and that is sent by an electronic device, where the request message of the first card file includes identification information of a first card and parameter information of the electronic device; determine the first card file based on identification information of the first card file, and determine a version of a target style file of the electronic device based on the parameter information of the electronic device; and the server sends the first card file and version information of the target style file to the electronic device.

With reference to the seventh aspect, in some implementations of the seventh aspect, the card management module is further configured to: receive a second request message that is used to request to update a first style file and that is sent by the electronic device, and send a second style file to the electronic device based on the second request message.

With reference to the seventh aspect and the foregoing implementations, in some implementations of the seventh aspect, the card management module is further configured to periodically receive the second request message that is used to request to update the first style file and that is sent by the electronic device.

With reference to the seventh aspect and the foregoing implementations, in some implementations of the seventh aspect, the first card file is a JS file, and the JS file includes a template part, a style part, and a script part.

With reference to the seventh aspect and the foregoing implementations, in some implementations of the seventh aspect, the second card file includes a root component and one or more adaptation components. The root component is a container component, and the adaptation component is one or more of an image component, an image gallery component, a layout component, a tag component, a switch component, a button component, a search component, a list component, a text box component, and a rate component.

With reference to the seventh aspect and the foregoing implementations, in some implementations of the seventh aspect, each of the one or more card style files corresponds to at least one type of electronic device, and/or each of the one or more card style files corresponds to an electronic device of at least one version, and/or each of the one or more card style files corresponds to at least one operating system version, and/or each of the one or more card style files corresponds to at least one application version.

With reference to the seventh aspect and the foregoing implementations, in some implementations of the seventh aspect, the parameter information of the electronic device includes at least one of the following information: type information of the electronic device, version information of the electronic device, operating system version information of the electronic device, and application version information corresponding to a card service request.

According to an eighth aspect, an electronic device is provided, including one or more processors, one or more memories, a plurality of applications, and one or more programs. The one or more programs are stored in the memory, and when the one or more programs are executed by the processor, the electronic device is enabled to perform the method performed by the electronic device according to any one of the first aspect and the implementations of the first aspect, the second aspect and the implementations of the second aspect, and the third aspect and the implementations of the third aspect.

According to a ninth aspect, an apparatus is provided. The apparatus is included in an electronic device, and the apparatus has a function of implementing behavior of the electronic device in the foregoing aspects and the possible implementations of the foregoing aspects. The function may be implemented by hardware, or may be implemented by executing corresponding software by hardware. The hardware or the software includes one or more modules or units corresponding to the foregoing function, for example, a display module or unit, a detection module or unit, or a processing module or unit.

According to a tenth aspect, a server is provided, including a processor, a memory, and an interface. The processor, the memory, and the interface cooperate with each other, so that the server performs the method that can be performed by the server according to any one of the first aspect and the implementations of the first aspect, the second aspect and the implementations of the second aspect, and the third aspect and the implementations of the third aspect.

According to an eleventh aspect, this application provides an electronic device, including a touch display. The touch display includes a touch-sensitive surface, a display, a camera, one or more processors, a memory, a plurality of applications, and one or more computer programs. The one or more computer programs are stored in the memory, and the one or more computer programs include instructions. When the instructions are executed by the electronic device, the electronic device is enabled to perform the possible method according to any one of the foregoing aspects.

According to a twelfth aspect, this application provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the method performed by the electronic device according to any one of the first aspect and the implementations of the first aspect, the second aspect and the implementations of the second aspect, and the third aspect and the implementations of the third aspect.

According to a thirteenth aspect, this application provides a computer-readable storage medium, storing computer instructions. When the computer instructions are run on an electronic device, the electronic device is enabled to perform the possible method according to any one of the first aspect and the implementations of the first aspect, the second aspect and the implementations of the second aspect, and the third aspect and the implementations of the third aspect, and the fourth aspect and the implementations of the fourth aspect.

According to a fourteenth aspect, this application provides a computer program product. When the computer program product runs on an electronic device, the electronic device is enabled to perform the possible method according to any one of the first aspect and the implementations of the first aspect, the second aspect and the implementations of the second aspect, and the third aspect and the implementations of the third aspect.

### BRIEF DESCRIPTION OF DRAWINGS

FIG. 1 is a schematic diagram of a structure of a terminal device according to an embodiment of this application;
FIG. 2 is a block diagram of a software structure of a terminal device according to an embodiment of this application;
FIG. 3 is a schematic diagram of a card style update mechanism;
FIG. 4 is a schematic diagram of a card service system according to an embodiment of this application;
FIG. 5(a) to FIG. 5(d) are a schematic diagram of a graphical user interface of a card service on a mobile phone according to an embodiment of this application;
FIG. 6(a) to FIG. 6(c) are a schematic diagram of another card service on a mobile phone according to an embodiment of this application;
FIG. 7(a) to FIG. 7(c) are a schematic diagram of still another card according to an embodiment of this application;
FIG. 8(a) to FIG. 8(c) are a schematic diagram of still another card according to an embodiment of this application;
FIG. 9 and FIG. 10 are schematic flowcharts of adjusting a card style according to an embodiment of this application;
FIG. 11 and FIG. 12 are still other schematic flowcharts of adjusting a card style according to an embodiment of this application;
FIG. 13 and FIG. 14 are still other schematic flowcharts of adjusting a card style according to an embodiment of this application;
FIG. 15 is a schematic diagram of a card file development process according to an embodiment of this application;
FIG. 16 is a schematic flowchart of still another method for adaptively generating a card style according to an embodiment of this application;
FIG. 17 is a schematic diagram of a running process of a card file according to an embodiment of this application;
FIG. 18A and FIG. 18B are a schematic flowchart of still another method for adaptively generating a card style according to an embodiment of this application;
FIG. 19 is a schematic diagram of a card development process according to an embodiment of this application;
FIG. 20 is a schematic diagram of still another card development process according to an embodiment of this application; and
FIG. 21 is a schematic diagram of still another card style update mechanism according to an embodiment of this application.

### DESCRIPTION OF EMBODIMENTS

The following describes the technical solutions in embodiments of this application with reference to the accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features.

A method for adaptively generating a card style provided in embodiments of this application may be applied to a terminal device, for example, a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device is not limited in embodiments of this application.

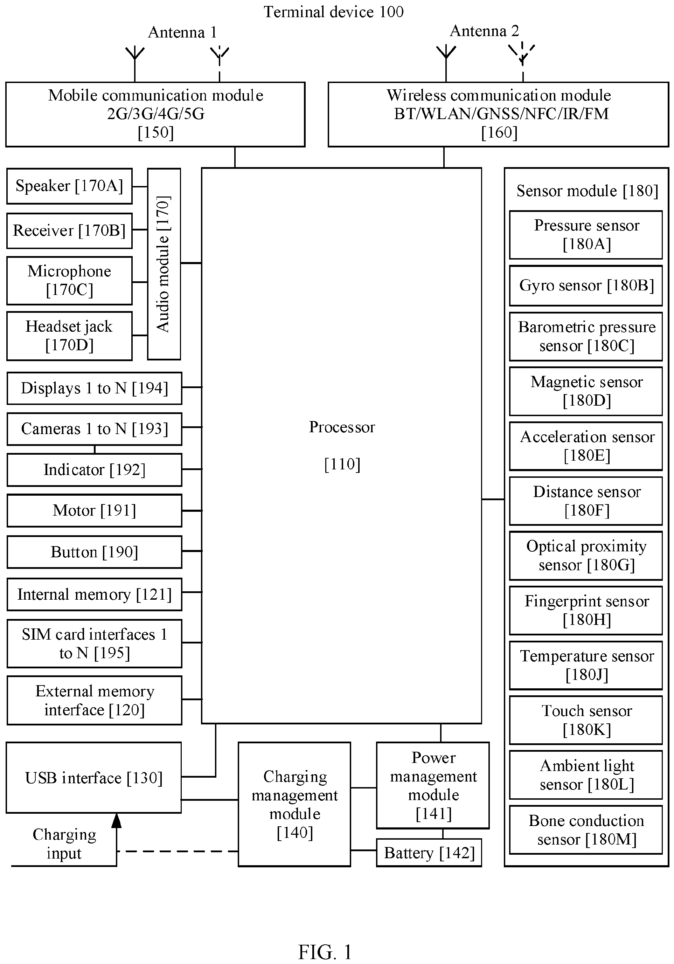

For example, FIG. 1 is a schematic diagram of a structure of a terminal device 100 according to an embodiment of this application. The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of this application constitutes no specific limitation on the terminal device 100. In some other embodiments of this application, the terminal device 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through an I2C interface, so that the processor 110 communicates with the touch sensor 180K through the I2C bus interface, to implement a touch function of the terminal device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component, for example, the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the terminal device 100. The processor 110 communicates with the display 194 through the DSI interface, to implement a display function of the terminal device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may be alternatively configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the terminal device 100, or may be configured to transmit data between the terminal device 100 and a peripheral device, or may be configured to connect to a headset for playing audio through the headset. The interface may be alternatively used to connect to another terminal device, for example, an AR device.

It may be understood that an interface connection relationship between the modules illustrated in this embodiment of this application is merely an example for description, and constitutes no limitation on the structure of the terminal device 100. In some other embodiments of this application, the terminal device 100 may alternatively use different interface connection manners in the foregoing embodiments or a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal device 100. When charging the battery 142, the charging management module 140 may further supply power to the terminal device by using the power management module 141.

The power management module 141 is configured to connect the battery 142 and the charging management module 140 to the processor 110. The power management module 141 receives an input from the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that includes wireless communication such as 2G, 3G, 4G, and 5G and that is applied to the terminal device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some function modules in the mobile communication module 150 may be disposed in the processor 110. In some embodiments, at least some function modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same component as the mobile communication module 150 or another function module.

The wireless communication module 160 may provide a solution that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology and that is applied to the terminal device 100. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the terminal device 100, the antenna 1 is coupled to the mobile communication module 150, and the antenna 2 is coupled to the wireless communication module 160, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The terminal device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, quantum dot light emitting diodes (quantum dot light emitting diodes, QLEDs), or the like. In some embodiments, the terminal device 100 may include one or N displays 194, where N is a positive integer greater than 1.

The terminal device 100 may implement an image shooting function by using the ISP, the camera 193, the video codec, the GPU, the display 194, the application processor, and the like.

The ISP may be configured to process data fed back by the camera 193. For example, during image shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected to the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the terminal device 100 may include one or N cameras 193, where N is a positive integer greater than 1.

The digital signal processor is configured to process a digital signal, and may process another digital signal in addition to the digital image signal. For example, when the terminal device 100 selects a frequency, the digital signal processor is configured to perform Fourier transform on frequency energy.

The video codec is configured to compress or decompress a digital video. The terminal device 100 may support one or more video codecs. In this way, the terminal device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. Applications such as intelligent cognition of the terminal device 100, for example, image recognition, facial recognition, speech recognition, and text understanding, may be implemented by using the NPU.

The external memory interface 120 may be configured to connect to an external storage card, for example, a micro SD card, to extend a storage capability of the terminal device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the terminal device 100. The internal memory 121 may include a program storage area and a data storage area. The program storage area may store an operating system, an application required by at least one function (for example, a sound playing function or an image playing function), and the like. The data storage area may store data (for example, audio data and a phone book) and the like created when the terminal device 100 is used. In addition, the internal memory 121 may include a high-speed random access memory, and may further include a non-volatile memory, for example, at least one magnetic disk storage device, a flash memory, or a universal flash storage (universal flash storage, UFS).

The terminal device 100 may implement an audio function, for example, music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an electrical audio signal into a sound signal. The terminal device 100 may listen to music or answer a call in a hands-free mode over the speaker 170A.

The receiver 170B, also referred to as an "earpiece", is configured to convert an electrical audio signal into a sound signal. When a call is answered or voice information is received by using the terminal device 100, the receiver 170B may be put close to a human ear to listen to a voice.

The microphone 170C, also referred to as a "mike" or a "mic", is configured to convert a sound signal into an electrical signal. When making a call or sending a voice information, a user may make a sound near the microphone 170C through the mouth of the user, to input a sound signal to the microphone 170C. At least one microphone 170C may be disposed in the terminal device 100. In some other embodiments, two microphones 170C may be disposed in the terminal device 100, to collect a sound signal and implement a noise reduction function. In some other embodiments, three, four, or more microphones 170C may be alternatively disposed in the terminal device 100, to collect a sound signal, implement noise reduction, identify a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The terminal device 100 determines pressure strength based on a capacitance change. When a touch operation is performed on the display 194, the terminal device 100 detects strength of the touch operation by using the pressure sensor 180A. The terminal device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on an SMS message application icon, an instruction for creating a new SMS message is performed.

The gyro sensor 180B may be configured to determine a motion posture of the terminal device 100. In some embodiments, angular velocities of the terminal device 100 around three axes (namely, x, y, and z axes) may be determined by using the gyro sensor 180B. The gyro sensor 180B may be configured to implement image stabilization during image shooting. For example, when a shutter is pressed, the gyro sensor 180B detects an angle at which the terminal device 100 jitters, calculates, based on the angle, a distance for which a lens module needs to compensate, and allows the lens to cancel the jitter of the terminal device 100 through reverse motion, to implement image stabilization. The gyro sensor 180B may be further used in a navigation scenario and a somatic game scenario.

The barometric pressure sensor 180C is configured to measure barometric pressure. In some embodiments, the terminal device 100 calculates an altitude by using a barometric pressure value measured by the barometric pressure sensor 180C, to assist in positioning and navigation.

The magnetic sensor 180D includes a Hall sensor. The terminal device 100 may detect opening and closing of a flip cover by using the magnetic sensor 180D. In some embodiments, when the terminal device 100 is a flip phone, the terminal device 100 may detect opening and closing of a flip cover by using the magnetic sensor 180D. Further, a feature, for example, automatic unlocking upon opening of the flip cover is set based on a detected opening or closing state of the flip cover.

The acceleration sensor 180E may detect magnitude of accelerations of the terminal device 100 in various directions (usually on three axes). Magnitude and a direction of gravity may be detected when the terminal device 100 is still. The acceleration sensor 180E may be further configured to identify a posture of the terminal device, and is applied to an application, for example, switching between a landscape mode and a portrait mode or a pedometer.

The distance sensor 180F is configured to measure a distance. The terminal device 100 may measure a distance in an infrared manner or a laser manner. In some embodiments, in an image shooting scenario, the terminal device 100 may measure a distance by using the range sensor 180F, to implement quick focusing.

The optical proximity sensor 180G may include, for example, a light-emitting diode (LED) and an optical detector, for example, a photodiode. The light-emitting diode may be an infrared light-emitting diode. The terminal device 100 emits infrared light outward by using the light-emitting diode. The terminal device 100 detects infrared reflected light from a nearby object by using the photodiode. When sufficient reflected light is detected, the terminal device 100 may determine that there is an object near the terminal device 100. When insufficient reflected light is detected, the terminal device 100 may determine that there is no object near the terminal device 100. The terminal device 100 may detect, by using the optical proximity sensor 180G, that the user holds the terminal device 100 close to an ear to make a call, to automatically perform screen-off for power saving. The optical proximity sensor 180G may also be used in a smart cover mode or a pocket mode to automatically perform screen unlocking or locking.

The ambient light sensor 180L is configured to sense ambient light brightness. The terminal device 100 may adaptively adjust brightness of the display 194 based on the sensed ambient light brightness. The ambient light sensor 180L may also be configured to automatically adjust white balance during image shooting. The ambient light sensor 180L may further cooperate with the optical proximity sensor 180G to detect whether the terminal device 100 is in a pocket, to avoid an accidental touch.

The fingerprint sensor 180H is configured to collect a fingerprint. The terminal device 100 may use a feature of the collected fingerprint to implement fingerprint-based unlocking, application lock access, fingerprint-based image shooting, fingerprint-based call answering, and the like.

The temperature sensor 180J is configured to detect a temperature. In some embodiments, the terminal device 100 executes a temperature processing policy by using the temperature detected by the temperature sensor 180J. For example, when the temperature reported by the temperature sensor 180J exceeds a threshold, the terminal device 100 reduces performance of a processor located near the temperature sensor 180J, to reduce power consumption and implement heat protection. In some other embodiments, when the temperature is lower than another threshold, the terminal device 100 heats the battery 142, to avoid abnormal shutdown of the terminal device 100 caused by a low temperature. In some other embodiments, when the temperature is lower than still another threshold, the terminal device 100 boosts an output voltage of the battery 142, to avoid abnormal shutdown caused by a low temperature.

The touch sensor 180K is also referred to as a touch panel. The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may be alternatively disposed on a surface of the terminal device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or a touch button. The terminal device 100 may receive a button input, and generate a button signal input related to a user setting and function control of the terminal device 100.

The motor 191 may generate a vibration prompt. The motor 191 may be configured to provide an incoming call vibration prompt and a touch vibration feedback. For example, touch operations performed on different applications (for example, image shooting and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the terminal device 100. The terminal device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The terminal device 100 interacts with a network through the SIM card, to implement functions such as calling and data communication. In some embodiments, the terminal device 100 uses an eSIM, namely, an embedded SIM card. The eSIM card may be embedded in the terminal device 100, and cannot be separated from the terminal device 100.

A software system of the terminal device 100 may use a layered architecture, an event-driven architecture, a microkernel architecture, a microservice architecture, or a cloud architecture. In this embodiment of this application, an Android system with a layered architecture is used as an example to describe a software structure of the terminal device 100.

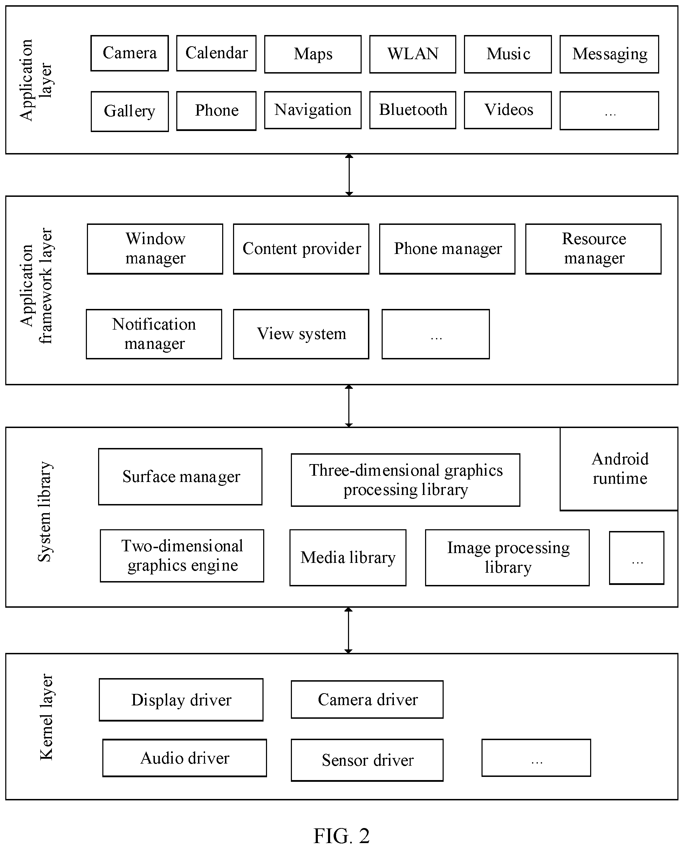

FIG. 2 is a block diagram of the software structure of the terminal device 100 according to an embodiment of this application. In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Videos, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is used to manage a window program. The window manager may obtain a size of the display, determine whether there is a status bar, perform screen locking, take a screenshot, and the like.

The content provider is used to store and obtain data, and enable the data to be accessed by an application program. The data may include a video, an image, audio, calls that are made and answered, a browsing history and bookmark, a phone book, and the like.

The view system includes visual controls such as a control for displaying a text and a control for displaying an image. The view system may be used to construct an application. A display interface may include one or more views. For example, a display interface including an SMS message notification icon may include a text display view and a picture display view.

The phone manager is used to provide a communication function of the terminal device 100, for example, management of a call status (including answering, declining, and the like).

The resource manager provides various resources such as a localized character string, an icon, an image, a layout file, and a video file for an application.

The notification manager enables an application to display notification information in a status bar, and may be used to convey a notification message. The notification manager may automatically disappear after a short pause without requiring a user interaction. For example, the notification manager is used to notify download completion, and give a message notification. The notification manager may alternatively be a notification that appears in a top status bar of the system in a form of a graph or a scroll bar text, for example, a notification of an application that is run on a background, or may be a notification that appears on a screen in a form of a dialog window. For example, text information is displayed in the status bar, an announcement is given, the terminal device vibrates, or an indicator light blinks.

The Android runtime includes a core library and a virtual machine. The Android runtime is responsible for scheduling and management of the Android system.

The core library includes two parts: a function that needs to be invoked in a Java language, and a core library of Android.

The application layer and the application framework layer run on the virtual machine. The virtual machine executes Java files at the application layer and the application framework layer as binary files. The virtual machine is used to perform functions such as object lifecycle management, stack management, thread management, security and exception management, and garbage collection.

The system library may include a plurality of function modules, for example, a surface manager (surface manager), a media library (media library), a three-dimensional graphics processing library (for example, an OpenGL ES), and a 2D graphics engine (for example, an SGL).

The surface manager is used to manage a display subsystem and provide fusion of 2D and 3D layers for a plurality of applications.

The media library supports playback and recording in a plurality of frequently used audio and video formats, a static image file, and the like. The media library may support a plurality of audio and video encoding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

For ease of understanding, in the following embodiments of this application, a terminal device having the structures shown in FIG. 1 and FIG. 2 is used as an example to describe in detail, with reference to the accompanying drawings and application scenarios, the method for adaptively generating a card style provided in embodiments of this application.

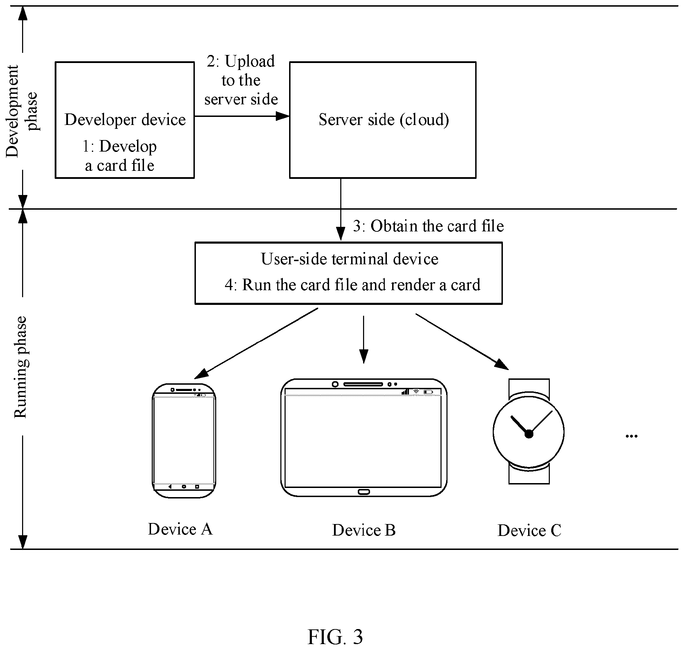

FIG. 3 is a schematic diagram of an implementation process of a card service. As shown in FIG. 3, the implementation process of the card service includes two phases: a card development phase and a card running phase. The process mainly involves interaction between a developer device, a server side, and a user-side terminal device. Specifically, the following steps are specifically included.

### Card development phase

Step 1: A card developer develops a card file.

Step 2: The developer uploads the card file to the server side.

It should be understood that, in a process of developing a card by the developer, to-be-compiled card source code is a UX file, and the UX file is compiled to generate a JS file. In other words, the card file uploaded to the server side is a JS file obtained after compilation, and may also be referred to as a "card execution file".

For example, as shown in the following UX file code listed in Table 1 to Table 3, the UX file may include a template (template) part, a style (style) part, and a script (script) part.

Code of the template (template) part may be shown in Table 1, is similar to a tag language of HTML, and constructs a structure of a page in combination with a basic component, a custom component, an event, and the like.

Code of the style (style) part may be shown in Table 2, and is used to describe a component style of a template (template). This part may determine how a component is displayed.

Code of the script (script) part may be shown in Table 3, and is used to define page data and implement a lifecycle interface.

**Table 1**

| |
|---|
| ```
    <template>
         <div class="card_box">
              <div class="title_box">
              </div >
              <div class="content_box">
              </div >
              <div class="menu_box">
              </div >
         </div >
    </template>
``` |

**Table 2**

| |
|---|
| ```
    <style>
         . title_box{...
         }
         title_text{...
         } content_box{...
         }
    </style>
``` |

**Table 3**

| |
|---|
| ```
    <script>
         module.exports={
              props:['title'],
              data: {
    title: `word'
    },
    close1:function(){
     }
    close2:function(){
     }
    }
    </script>
``` |

### Card running phase

Step 3: A user requests the card service from the server side by using the terminal device, and obtains the card file from the server side.

Step 4: The terminal device runs the card file, completes a rendering process of the card, and presents the card to the user on the terminal device.

It should be understood that the rendering process of the card is a display process of the card. Specifically, a host application (application, App) of the terminal device obtains the card file, a fast application engine (FastappEngine App) of the host app obtains a system capability of the current terminal device, and then runs the card file to complete the rendering process of the card. For example, the host app may be an application, for example, a leftmost screen or a voice assistant of the terminal device.

FIG. 3 shows a plurality of possible user-side terminal devices, for example, a mobile phone, a tablet computer, a smartwatch, and a vehicle-mounted device. Different terminal devices may correspond to different operating systems. Different types of terminal devices or different operating systems have different requirements on card styles. However, currently, the card file obtained by the terminal device from the server side is the JS file obtained after compilation, and the card file cannot meet increasing requirements of the terminal devices on the card styles.

In addition, for a current process of implementing the card service, if an operating system of the terminal device changes, or the user expects to modify the card style, only the developer can modify a source file (namely, the UX file) of the card, re-develop and recompile the source file, upload the source file to the server side, and run the source file on the terminal device again. In this process, a process of modifying the card style is complex, and difficulty of developing the card by a CP increases.

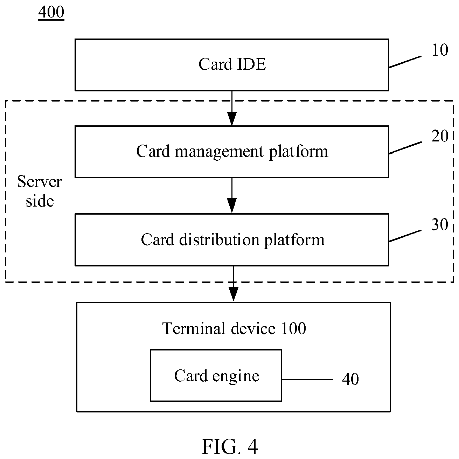

FIG. 4 is a schematic diagram of a card service system according to an embodiment of this application. As shown in FIG. 4, the card service system 400 includes a card integrated development environment (integrated development environment, IDE) 10, a card management platform 20, a card distribution platform 30, and a terminal device 100 on which a card engine 40 is installed.

The card IDE 10 may be understood as an integrated development environment for developing a quick app and a quick service card, and includes a series of auxiliary card development tools. The auxiliary development tools may include Visual Studio, Dev C++, Xcode, Visual C++ 6.0, C-Free, Code: Blocks, and the like. For example, currently, a card IDE provided by HUAWEI may also be referred to as a "HUAWEI quick application IDE". Developers may download the HUAWEI quick application IDE from a HUAWEI AppGallery, install and register the HUAWEI quick application IDE, and further perform efficient programming, breakpoint debugging, cloud testing, and the like by using the HUAWEI quick application IDE, to implement a card service. Details are not described herein again.

The card management platform 20 and the card distribution platform 30 are function modules on a server side. For example, in this embodiment of this application, a HUAWEI Ability Gallery (HUAWEI Ability Gallery, HAG) may be used as the server side, and is referred to as a "HAG cloud side" for short. The HAG cloud side may include the card management platform 20 and the card distribution platform 30. In other words, the card management platform 20 and the card distribution platform 30 are modules distinguished on the HAG cloud side based on different functions. In subsequent descriptions or specific implementations, if the terminal device requests the card file from the HAG cloud side, the terminal device may request a card file from the card management platform 20 and/or the card distribution platform 30. This is not strictly distinguished in this embodiment of this application.

The card management platform 20 and the card distribution platform 30 are all-scenario traffic entrances for aggregating pan-terminal devices, and may implement one-time service access and omnimedia distribution. Specifically, the card management platform 20 may perform storage, management, and the like on a card source file (a UX file) and a card file (a JS file), may implement a compilation process of the UX file, and may further forward a JS file obtained after compilation to the card distribution platform 30. The card distribution platform 30 may store and manage the card file and the like, and implement a dynamic compilation process of the card file. In different application scenarios, the card management platform 20 and the card distribution platform 30 may provide service skills for traffic entrances such as AI Tips, AI Search, instant access, AI Voice, and AI Lens. Descriptions are provided with reference to different embodiments and details are not described herein again.

For example, the card management platform 20 may include a card management module 21 and/or a style management module 22. The card distribution platform 30 may be alternatively a unit that is configured to deliver the card file and that is of the card management module 21. Division of function modules on the HAG cloud side is not limited in this embodiment of this application.

The terminal device 100 may be a device having the hardware structure described in FIG. 1 and the software architecture described in FIG. 2, for example, a mobile phone, a large-screen television, a tablet computer, a sound box having a screen, a head unit device, a watch, or another pan-terminal device. This is not limited in this embodiment of this application. The card engine 40 is installed on the terminal device 100. A mobile phone is used as an example. The card engine 40 may be used on a leftmost screen of the mobile phone to invoke a card service of another application. The card engine 40 may be alternatively an internal module of an application. For example, a voice assistant includes the module, and may invoke a card service of a weather application or a flight master application. For ease of description, the applications are collectively referred to as a "card engine" in this embodiment of this application.

It should be further understood that, in this embodiment of this application, in addition to the card rendering function of the fast application engine described in FIG. 3, the card engine 40 further has a compilation function. In other words, the card engine 40 may implement functions of card compilation and card rendering. Details are described in subsequent embodiments, and details are not described herein again.

First, before a card style generation method provided in embodiments of this application is described, card services provided by different applications on different terminal devices and card services provided by a same application on different terminal devices are first described.

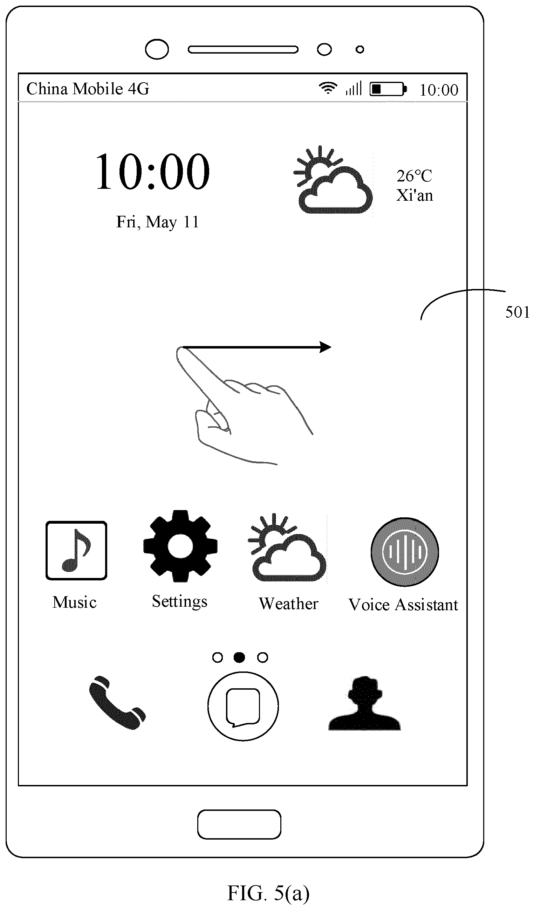

FIG. 5(a) to FIG. 5(d) are a schematic diagram of a graphical user interface (graphical user interface, GUI) of a card service on a mobile phone according to an embodiment of this application. FIG. 5(a) to FIG. 5(d) are a schematic diagram showing cards of different applications on a leftmost screen of the mobile phone by using the mobile phone as a terminal device.

FIG. 5(a) shows currently output interface content 501 that is displayed by a screen display system of the mobile phone in an unlocking mode of the mobile phone. The interface content 501 is a home screen of the mobile phone. The interface content 501 displays a plurality of applications (applications, Apps), for example, Music, Settings, Weather, and Voice Assistant. It should be understood that the interface content 501 may further include more other applications. This is not limited in this application.

A user performs an operation shown in FIG. 5(a), that is, slides rightward on the home screen 501 of the mobile phone, and the mobile phone displays a leftmost screen interface 502 shown in FIG. (b). It should be understood that the user may display the leftmost screen interface 502 by sliding for one or more times. This is not limited in this embodiment of this application.

It should be further understood that the leftmost screen of the mobile phone may integrate quick display content of a plurality of applications such as an application suggestion, fitness and health, a life service, news, a video, and music. The leftmost screen of the mobile phone may further automatically generate reminder cards corresponding to various applications of AI Tips. A card may provide a service with a finer granularity than that of the app, and may clearly present a capability of the card. For example, a service or content that the user cares most is directly presented to the user in a form of an interactive card service. This helps the user quickly browse and use the service or the content.

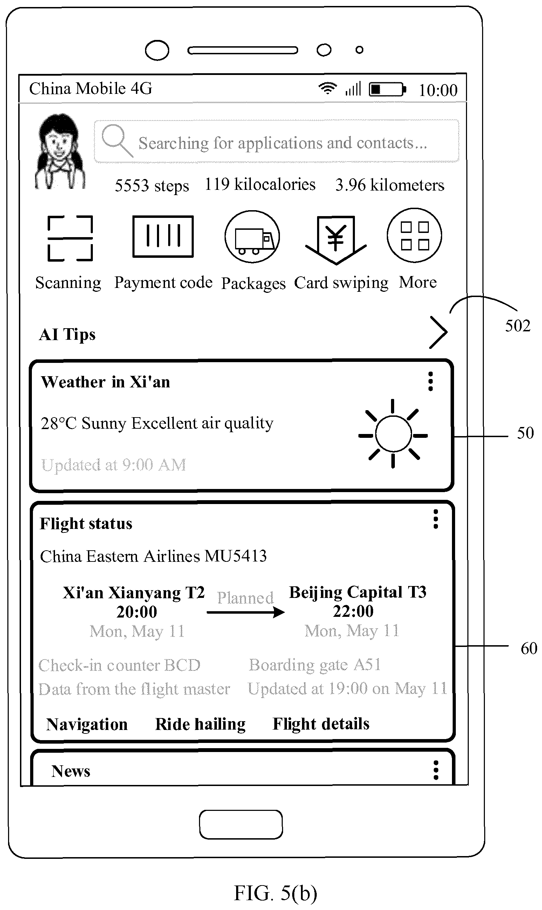

As shown in FIG. 5(b), the leftmost screen interface 502 of the mobile phone may display global search, fitness and health information, card swiping, a payment code, package information, schedule information, and the like, and display cards of different applications. A weather application and a flight master application are used as an example. On the leftmost screen interface 502, a weather card 50 and a flight master card 60 may be displayed as shown in FIG. (b).

In a possible implementation, styles, sizes, and display content of cards of different applications are different. In this embodiment of this application, an area in which the card is located may be divided into a plurality of function areas, for example, a title area, a content area, a statement area, and an operation area. Different content is displayed in different areas to implement functions corresponding to the areas.

Optionally, the title area is used to identify an application to which the card belongs or a service provided by the card. An icon or a title text may be displayed in the title area, and the title area may further include a card management button. The content area is used to select and fill in a content template of the application. The statement area is used to display content such as an application or service source, an update status, update time, and a responsibility statement of the card. The operation area may include a service-related button, and the like. The title area and the content area are mandatory constituent parts of the card, and the statement area and the operation area are optional constituent parts of the card.

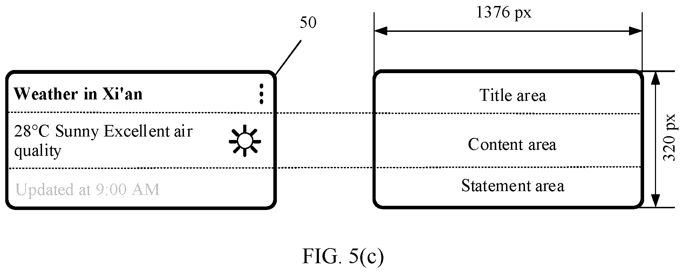

For example, as shown in FIG. 5(c), the weather card 50 may include a title area, a content area, and a statement area. The title area is used to identify an application "weather" to which the card 50 belongs, or is further displayed as "Weather in Xi'an" of a current location of the user. The content area is used to fill in display content of the weather application to which the card 50 belongs. For example, current weather in Xi'an is "28°C, sunny, excellent air quality". The content area may further include a small weather icon, for example, "Sun" or "Cloud", so that the user quickly obtains weather information, to improve visual experience of the user. Update time of the weather application to which the card 50 belongs is displayed in the statement area, and the weather data is updated at 9:00 AM.

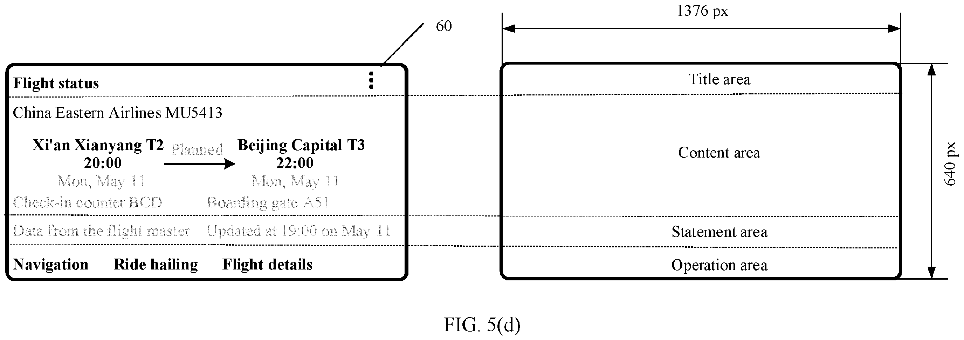

For example, as shown in FIG. 5(d), the flight master card 60 may include a title area, a content area, a statement area, and an operation area. The title area is used to identify a service provided by the flight master card 60, namely, a flight status. The content area is used to fill in flight status information for the user to view, for example, uncompleted trip information of the user, namely, "from the Terminal T2 of the Xi'an Xianyang International Airport on 20:00 in May 11 to the Terminal T3 of the Beijing Capital International Airport on 22:00, and more information such as a check-in counter and a boarding gate. The statement area displays a data source, update time, and the like of the flight status information provided by the flight master card 60. The operation area includes buttons such as "Navigation", "Ride hailing", and "Flight details" that are related to the current service. The user may tap any button in the operation area, to enter an application related to the button. For example, the user taps "Navigation", and the mobile phone may start an installed application that can provide a navigation function, for example, AutoNavi Map or Baidu Map. Details are not described herein again.

In addition, sizes of different cards may be the same or different. For example, the weather card 50 and the flight master card 60 have a same display length but different display widths on the leftmost screen of the mobile phone. Currently, on the leftmost screen of the mobile phone, the weather card 50 has a display length of 1376 px and a display width of 320 px, and the flight master card 60 has a display length of 1376 px and a display width of 640 px. px is a density independent pixel (density independent pixel, px), and is used to indicate a size of an icon or an area on a display.

The foregoing describes, with reference to the weather card 50 and the flight master card 60, that cards of different applications may have different styles, different sizes, different constituent areas, different display content, and the like. In addition, a card of a same application may also have different styles, different sizes, different constituent areas, different display content, and the like in different use processes.

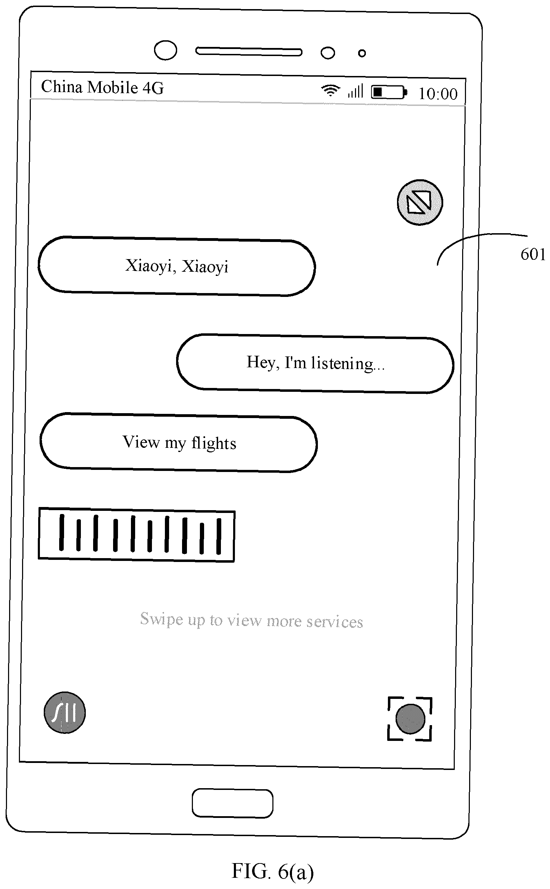

FIG. 6(a) to FIG. 6(c) are a schematic diagram of another card service on the mobile phone according to an embodiment of this application. By using the mobile phone as the terminal device, FIG. 6(a) to FIG. 6(c) are a schematic diagram of the flight master card 60 in a process of using a voice assistant of the mobile phone. It should be understood that, in the process of using the voice assistant, the user may invoke different applications or functions by using different voice instructions. The different applications may provide card services in the voice assistant, so that the user can quickly use a related function of the application.

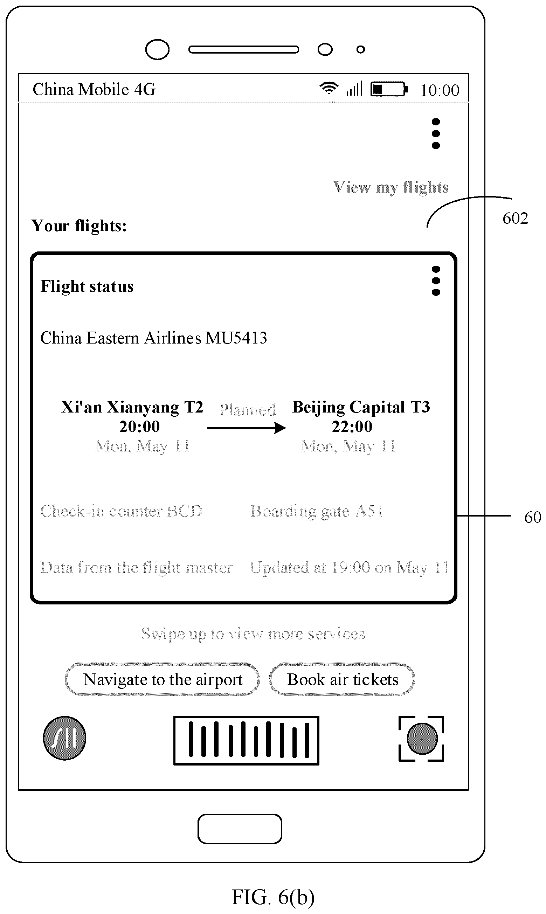

When a voice assistant function is enabled on the mobile phone, the user may wake up the mobile phone by using a preset voice instruction. For example, as shown in FIG. 6(a), when the mobile phone is not unlocked, the user wakes up the mobile phone by using a voice instruction "Xiaoyi, Xiaoyi", and sends a voice instruction "View my flight". In response to the voice instruction, the mobile phone displays an interface 602 shown in FIG. 6(b). The interface 602 includes content such as the flight master card 60 and another recommended voice instruction. With reference to FIG. 5(a) to FIG. 5(d) and FIG. 6(a) to FIG. 6(c), styles of the flight master cards 60 from a same application, namely, a flight master, may be different.

A scenario in which the user uses the voice assistant is generally a scenario in which it is inconvenient to operate the mobile phone by using a finger, for example, a scenario in which the user expects to view flight information during driving. Therefore, more information may be displayed on the flight master card 60, provided by the voice assistant, in a content area, and an operation area, buttons that can be tapped by the user in an operation area, or the like is reduced. In addition, more areas are reserved on a mobile phone interface to display some voice instructions recommended to the user, so that it is convenient for the user to further perform an operation by using other voice instructions, to obtain more services.

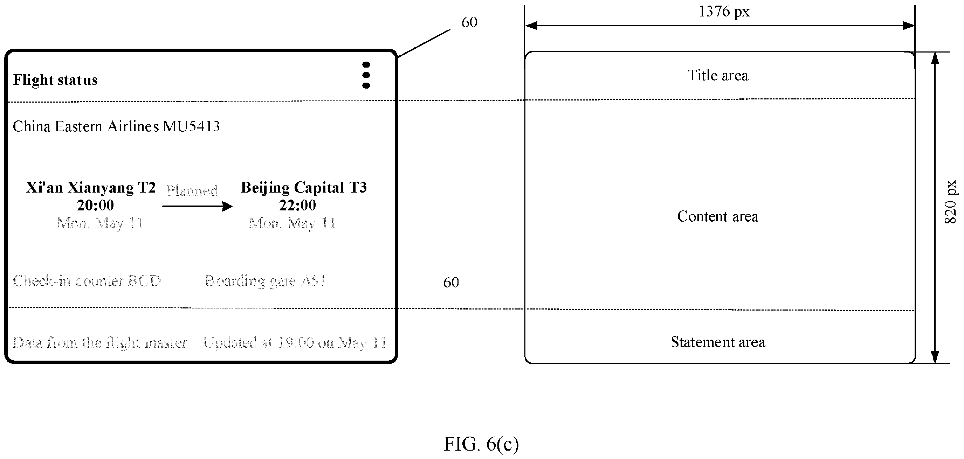

For example, as shown in FIG. 6(c), the flight master card 60 in the voice assistant application may include a title area, the content area, and a statement area. Different from the flight master card on the leftmost screen of the mobile phone in FIG. 5(a) to FIG. 5(d), the flight master card provided in the voice assistant may include no operation area, and more areas are reserved on a mobile phone interface 602 to display some voice instructions recommended to the user, for example, voice instructions related to a scenario in which the user currently views flight information, such as "Navigate to the airport" or "Book air tickets", so that the user obtains more services by using the voice instructions. In addition, a size of the flight master card 60 provided in the voice assistant may also be different from that of the flight master card 60 on the leftmost screen of the mobile phone in FIG. 5(a) to FIG. 5(d). For example, a display length is 1376 px, and a display width is 820 px. This is not limited in this embodiment of this application.

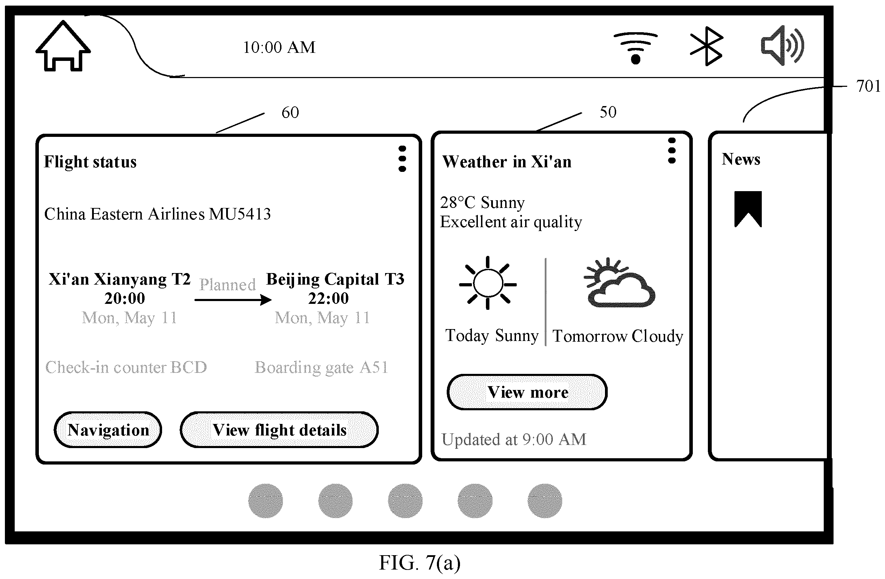

FIG. 7(a) to FIG. 7(c) are a schematic diagram of still another card according to an embodiment of this application. FIG. 7(a) to FIG. 7(c) are a possible display schematic diagram of the weather card 50 and the flight master card 60 on a vehicle-mounted device.

It should be understood that the vehicle-mounted device generally has a larger display, and may provide a larger display area to display a related card. More detailed and more content may also be displayed on different cards, so that it is convenient for the user to view and obtain more information.

As shown in FIG. 7(a), the weather card 50 and the flight master card 60 may be horizontally arranged on a vehicle-mounted device interface 701 in a grid shape, to adapt to the large display of the vehicle-mounted device. The user may swipe left or right to view more cards to obtain a corresponding service.

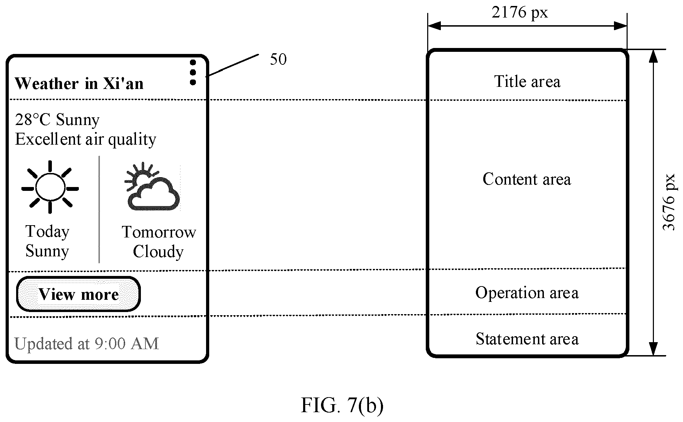

For example, as shown in FIG. 7(b), the weather card 50 on the vehicle-mounted device interface 701 may include a title area, a content area, an operation area, and a statement area. For display of the title area and the statement area, refer to related descriptions in FIG. 5(a) to FIG. 5(d), or more information may be included. Details are not described herein again. The content area may include weather in Xi'an in a plurality of days such as a current day, tomorrow, and the day after tomorrow, so that the user quickly obtains weather information of the current day and a plurality of days in future. A quantity of days and a date for displaying weather are not limited in this embodiment of this application. The operation area may include a "View more" button. If the user wants to view more weather information, the user may tap the "View more" button to enter a weather application and obtain more weather information. In addition, a display length and a display width of the weather card 50 may adapt to a size of a current display of the vehicle-mounted device. For example, the weather card 50 has the display length of 2176 px and the display width of 3676 px on the vehicle-mounted device.

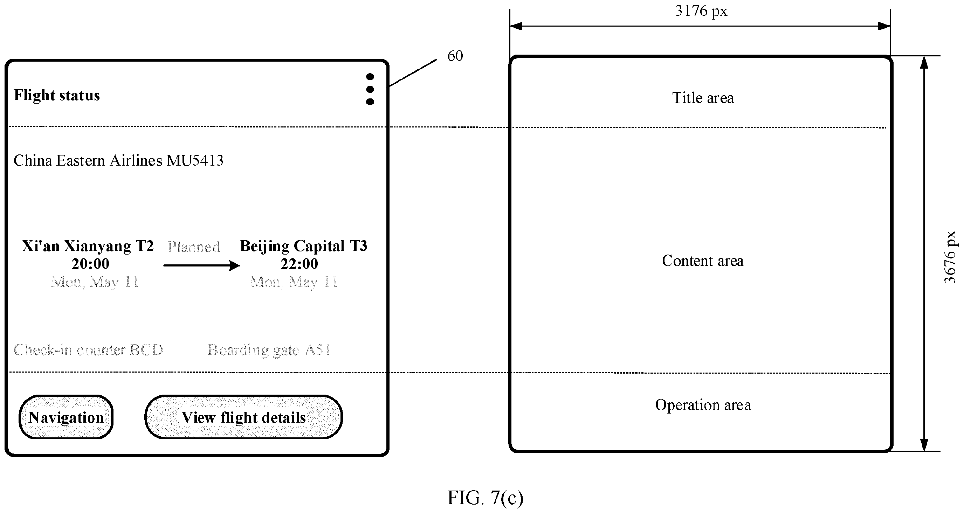

For example, as shown in FIG. 7(c), the flight master card 60 on the vehicle-mounted device interface 701 may include a title area, a content area, and an operation area. The operation area includes buttons such as "Navigation" and "Flight details" that are related to a current service. The user may tap any button in the operation area, to enter an application related to the button. For example, the user taps "navigation", and may enable a navigation function of the vehicle-mounted device, to better adapt to a current driving scenario of the user. In addition, the flight master card 60 has a display length of 3176 px and a display width of 3676 px. On the vehicle-mounted device, the display width of the flight master card 60 is the same as a display width of the weather card 50, so that the flight master card 60 can be more neatly and attractively displayed on the display of the vehicle-mounted device in the grid shape, to improve visual or viewing experience of the user. This is not limited in this embodiment of this application.

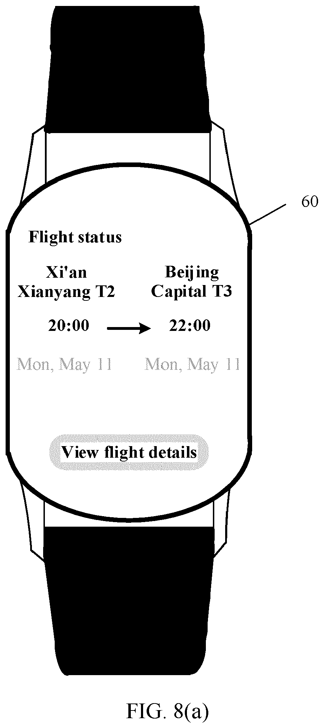

FIG. 8(a) to FIG. 8(c) are a schematic diagram of still another card according to an embodiment of this application. FIG. 8(a) to FIG. 8(c) are a possible display schematic diagram of the flight master card 60 on a smartwatch.

It should be understood that a display of the smartwatch is small. Therefore, key information that is related to the user and that is included in a current card may be displayed, to conveniently remind the user to view and obtain the key information.

As shown in FIG. 8(a), the flight master card 60 may be tiled on a smartwatch interface, and has an irregular outline style adapted to the display of the smartwatch, to adapt to the display of the smartwatch. The user may view more cards, exit a card, and the like in different operation manners such as a slide, a single tap, and a double tap. This is not limited in this embodiment of this application.

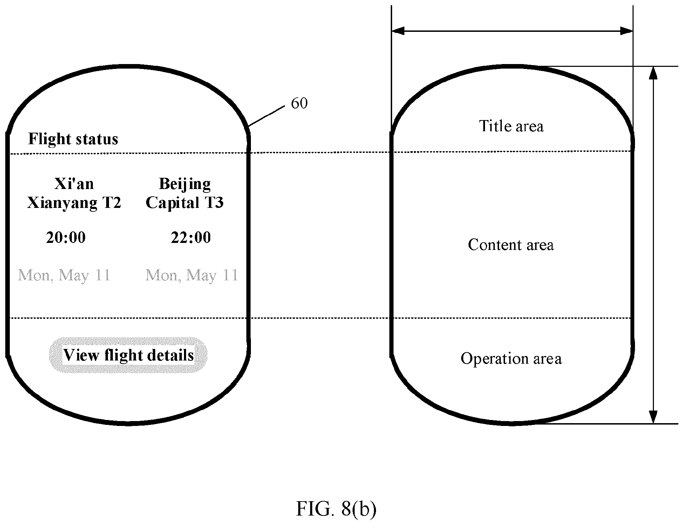

For example, as shown in FIG. 8(b), the flight master card 60 on the smartwatch interface may include a title area, a content area, and an operation area. The content area includes only key information such as a flight schedule of the user and time. The operation area includes a "View flight details" button, and the user may tap the "View flight details" button to enter a flight master application, and view more flight information such as the check-in counter and the boarding gate.

Optionally, for a terminal device with a display in an irregular shape, for example, the smartwatch, a shape of the card may adapt to the display in the irregular shape, or a shape of the card may be different regular shapes such as a rectangle, a square, and a circle. This is not limited in this embodiment of this application.

According to the examples of the schematic diagrams of the cards in FIG. 5(a) to FIG. 8(c), card styles provided by different applications on different terminal devices may be different, and card styles provided by a same application on different terminal devices are also changeable.

First, an embodiment of this application provides an example of a card layout component for a developer. The example of the layout component specifies a plurality of standard components. In this embodiment of this application, the following 11 components shown in Table 4 are used as examples, and functions of each component are listed below.

**Table 4**

| Component number | Component category | Component name | Component function |
|---|---|---|---|
| 1 | Container component | Container component | A root node of a card and a parent node of another adaptation component, be responsible for event scheduling of all components |
| 2 | Image component | Image component | Listen to a width change event sent by the container component and adjust a quantity of displayed images and a width and a height of the image |
| 3 | Image_gallery component | Image gallery component | An image gallery component that complies with a raster system, be capable of listening to the width change event sent by the container component and adjusting a quantity of images and a width and a height of the image |
| 4 | Frame component | Layout component | Used to adjust a layout relationship between components, this component may listen to the width change event sent by the container component and adjust a width and a height. |
| 5 | Tag component | Tag component | Have a capability of switching a plurality of tag display modes, and be capable of listening to a width and font change event sent by the container component and adjusting a width, a height, and a font size |
| 6 | Action component | Switch component | Be capable of listening to the width and font change event sent by the container component and adjusting a width, a height, and a font size |
| 7 | Button component | Button component | Be capable of listening to the width and font change event sent by the container component and adjusting a width, a height, and a font size |
| 8 | Search component | Search component | Be capable of listening to the width and font change event sent by the container component and adjusting a width, a height, and a font size |
| 9 | List component | List component | Be capable of listening to the width and font change event sent by the container component and adjusting a width, a height, a quantity, and a font size |
| 10 | Text component | Text box component | Be capable of listening to the width and font change event sent by the container component and adjusting a width, a height, a quantity of fonts, and a font size |
| 11 | Rate component | Rate component | Be capable of listening to the width and font change event sent by the container component and adjusting a width, a height, and a font size |

Specifically, it can be learned from the 11 standard components listed in Table 4 that the 11 standard components may provide the following main functions.
**1. The container component may be used** as a **component scheduling center.**

For example, as a root component of all other adaptation components, the container component may listen to a change of a style of the operating system of the terminal device, and listen to an event that the user modifies a font, a landscape/portrait orientation change event of the terminal device, a foldable screen change event, a language environment change event of the terminal device, and the like. All changes that occur on the terminal device may be monitored and scheduled by the container component, and notified to the other adaptation component in a message manner. The other adaptation components may listen to a message notification of the container component, and adjust styles of the other adaption components, for example, a font, a width, and a height, to adapt to the changes that occur on the terminal device.

### 2. Adaptive font adjustment

For example, a font type of the standard component listed above may be adjusted to be consistent with that of the operating system of the terminal device. Alternatively, a font size may be adjusted. For example, the font size and a font size of the operating system of the terminal device are adjusted at an equal proportion, or scaled down or scaled up at a specific proportion.

### 3. Adaptive layout adjustment

The standard component listed above may be used to perform a mirror layout on the card. For example, for an Arabic country, when a language environment changes to a mirror language, a layout of a component may also be correspondingly changed to a mirror layout.

Alternatively, some components may further implement rasterization of a card style. For example, when a screen state of the terminal device changes, for example, a landscape mode change, a portrait mode change, a screen folding change, or a screen unfolding change, the standard component provided in this embodiment of this application may further automatically compress or expand the component according to a raster formula, to adjust an aspect ratio.

It should be understood that all or some of the 11 standard components listed in Table 4 may participate in a process of adjusting the card style. This is not limited in this embodiment of this application.

It should be further understood that the 11 standard components listed in Table 4 may support different terminal devices, for example, " 1+8+n" pan-terminal devices in the HUAWEI Seamless AI Life Strategy released by HUAWEI. "1" indicates "a mobile phone", "8" indicates "a tablet computer, a PC, a wearable device, a high resolution (high definition, HD) device, an artificial intelligence (artificial intelligence, AI) speaker, a headset, a VR device, a head unit", and the like, and "N" indicates "pan-Internet of Things (Internet of Things, loT) hardware device", including terminal devices with different functions such as lighting, security protection, an environment, and cleaning. The pan-terminal devices may cover a plurality of scenarios.

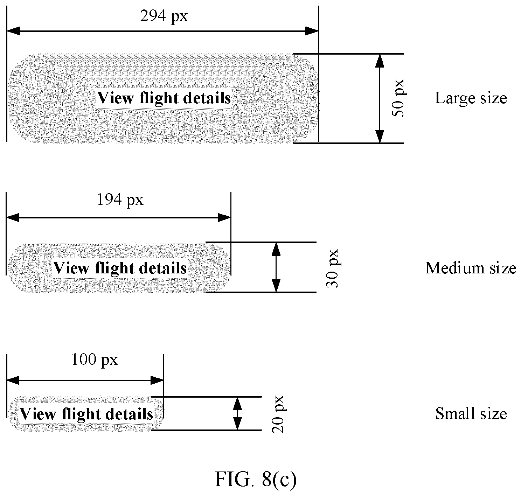

In a possible implementation, the foregoing standard components may be generally classified into a large size level, a medium size level, and a small size level, and each size level corresponds to a different component width and height. For example, the "View flight details" button in the operation area shown in FIG. 8(c) may be controlled by the button component or the like to display the button in different sizes of a large size (294 px×50 px), a medium size (194 px×30 px), or a small size (100 px×20 px). It should be understood that different buttons may correspond to different size specifications, and examples are not provided herein one by one.

This embodiment of this application provides an example of a set of card layout components. When developing different cards, the developer may perform a card layout based on the card layout component provided by the system. For various scenarios that may cause a change of the card style, the developer adjusts an overall layout of the card by adjusting various card layout components of the card.

Optionally, in this embodiment of this application, the scenarios that may cause the style change of the card may include the following.

### Scenario 1

For different terminal devices, such as a mobile phone, a tablet computer, a large-screen television, a vehicle-mounted device, and a smartwatch, or for different system versions of a same terminal device, or for different screen presentation manners such as a landscape mode, a portrait mode, and a foldable screen of a same terminal device, requirements for a style of a same card are different.

### Scenario 2

The style of the card may change with a change of an attribute of the terminal device. The change of the attribute of the terminal device may include a change of a type, an operating system, a screen state, or the like of the current terminal device.

It should be understood that when the card is loaded on the terminal device for the first time, the system obtains the card and a style file corresponding to the card based on the attributes such as the type, the operating system, and the screen state of the current terminal device. The style file determines a display style of the card on a display. When the attribute of the terminal device changes, the style of the card also changes, and an original style file of the card is overwritten.

### Scenario 3

The rendering process of the card has been completed. In a use process, if the user actively modifies a display font size, a screen flipping mode, or the like of the terminal device, the style of the card also changes accordingly.

For the foregoing different scenarios, if the developer adjusts the card style or the component layout each time, technical difficulty of developing the card increases and ecosystem expansion of the card service is hindered. For the foregoing different scenarios, an embodiment of this application provides a method for adaptively generating a card style. The following describes in detail different application scenarios.

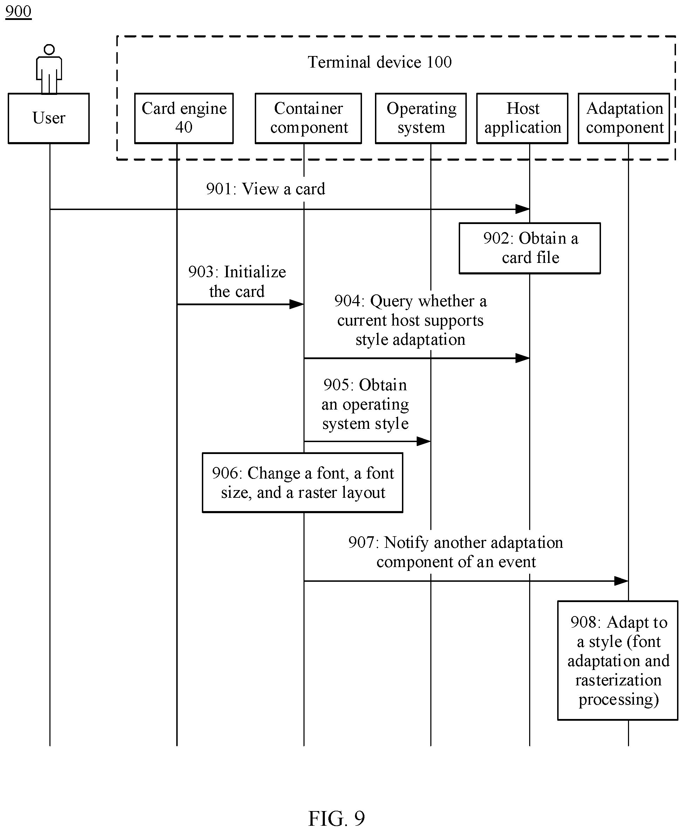

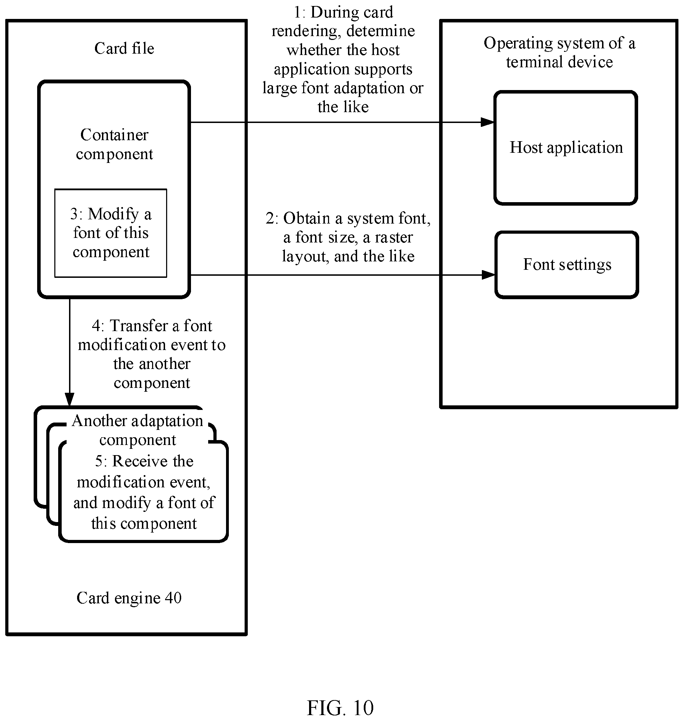

FIG. 9 and FIG. 10 are schematic flowcharts of adjusting a card style according to an embodiment of this application. The following uses an initialization process of a flight status card 60 in a voice assistant application on a mobile phone as an example to describe a process of loading a card on the mobile phone for the first time.

As shown in FIG. 9, the method includes the following steps.

901: A user views the card in a host application, that is, requests a card service.

For example, the user requests to view a flight status in the voice assistant application for the first time. The current voice assistant application may be understood as the host application, and the card that the user applies to view is a flight status card. In other words, the user requests the card service from a flight master application by using the voice assistant application.

Alternatively, for example, a leftmost screen of the mobile phone may be the host application, and the card service may be requested from a flight master application or a weather application.

902: The host application obtains a card file. The card file may be the JS file described above.

903: A card engine 40 initializes the card file. Specifically, a process of initializing the card is a process in which the card engine 40 starts to render the card.

904: During card rendering, first invoke a container component to query whether the current host application supports adaptive adjustment of a card style.

905: When the host application supports adaptive adjustment of the card style, the card engine 40 invokes the container component to obtain a style of an operating system of a terminal device.

Optionally, the style of the operating system may include information such as a current font, a font size, and a screen state. The screen state may refer to a display size of a screen, landscape display, portrait display, or the like.

906: The container component synchronously modifies a font, a font size, and a raster layout of the container component based on the style of the operating system, to adapt to a current style of the operating system.

907: The container component notifies another adaptation component of a modification event by using a message.

Optionally, the message may include information such as a modified font, font size, and raster layout of the container component. In a possible implementation, the message may be a broadcast message. This is not limited in this embodiment of this application.

Optionally, the adaptation component in this embodiment of this application may be one or more components listed in Table 4 other than the container component, for example, one or more of components such as the image component, the image_gallery component, and the frame component. This is not limited in this embodiment of this application.

908: After receiving the message from the container component, the another adaptation component completes modification and rasterization of a font and a font size of the another component to adapt to the current style of the operating system.

A style of the flight status card 60 shown in FIG. 6(c) is used as an example. When a card of a flight master is loaded for the first time in the voice assistant application of the mobile phone, the container component may obtain the style of the operating system of the terminal device, and then the container component and a plurality of other adaptation components such as the image component, the image_gallery component, the frame component, and a button component are synchronously modified to a font, a font size, a raster layout, and the like that adapt to the current style of the operating system. A flight status card 60 finally presented to the user after rendering includes the title area, the content area, and the statement area. A layout of each area and a displayed text may adapt to the current style of the operating system.

A process of the foregoing method 900 corresponds to the system 400 provided in the embodiment of this application, and may be a process of Step 1 to Step 5 shown in FIG. 10. Specifically, a JS file that is of a card and that is obtained by the card engine 40 includes a container component and another adaptation component module, and a process includes the following steps.

Step 1 corresponds to 901 to 904 in FIG. 9. During card rendering, the container component determines whether the host application supports large font adaptation and the like, that is, determines whether the host application supports adaptive adjustment of the card style.

Step 2 corresponds to 905 in FIG. 9. The container component obtains a style of an operating system of the terminal device.

Step 3 corresponds to 906 in FIG. 9. The container component modifies a font and the like of the container component, for example, synchronously modifies the font, a font size, and a raster layout based on the style of the operating system, to adapt to the current style of the operating system.

Step 4 corresponds to 907 in FIG. 9. The container component transfers a modification event to the another adaptation component by using a message.

Step 5 corresponds to 908 in FIG. 9. The another adaptation component receives the modification event and modifies a font and the like of the another component to adapt to the current style of the operating system.

It should be understood that the another adaptation component in this embodiment of this application may include one or more components listed in Table 4, or more other adaptation components that are not listed. This is not limited in this embodiment of this application.

When the card is loaded on the terminal device for the first time, the system obtains the card and a style file corresponding to the card based on attribute information such as a type, the operating system, and a screen state of the current terminal device. The style file determines a display style of the card on a display.

By using the method described above, component standardization is performed on a plurality of components, and association adaptation between the card style and the style of the operating system can be implemented in a standard component. In a process of developing the card style, a developer does not perceive a style change of the operating system of the terminal device. In a process of initializing the card, the card engine 40 listens to the style change of the operating system of the terminal device, to synchronously modify a style of each component of the card engine 40, so as to synchronize the card style. In this process, a development burden and a task of the developer can be reduced, a process in which the developer continuously modifies styles of all components related to the card is avoided, and a problem that styles of the card and the operating systems are inconsistent when the user manually modifies the font of the system or the screen state is avoided.

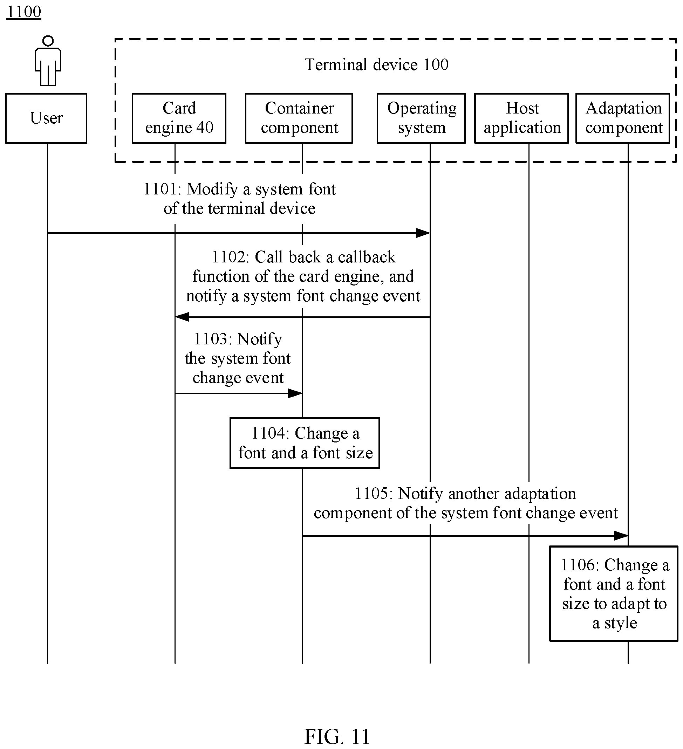

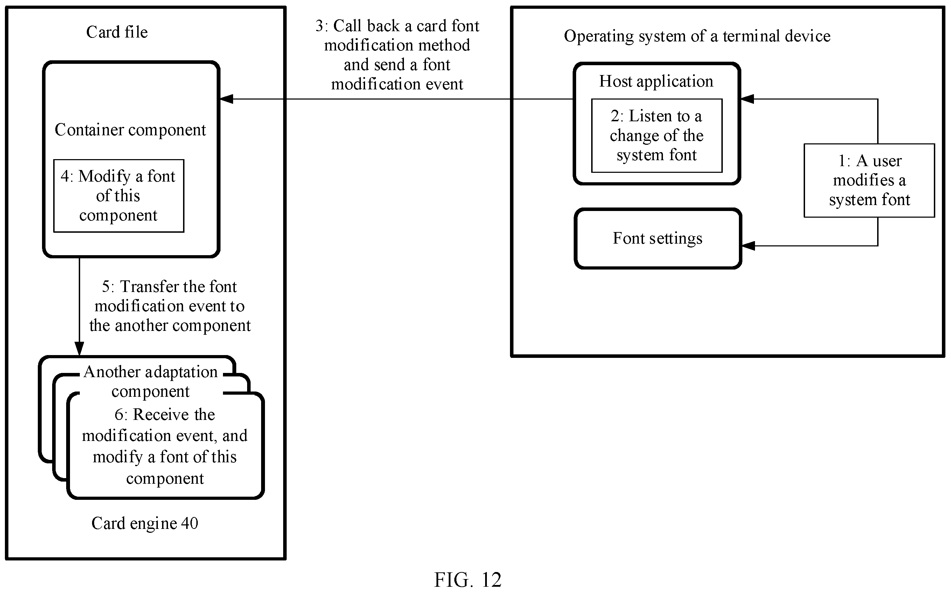

FIG. 11 and FIG. 12 are still other schematic flowcharts of adjusting a card style according to an embodiment of this application. The following uses a style of the flight status card 60 shown in FIG. 5(d) as an example to describe a process in which the flight status card 60 performs font adaptation in a scenario in which a user modifies a font of a mobile phone.

As shown in FIG. 11, the method includes the following steps.

1101: The user modifies a system font of a terminal device.

For example, that the user modifies a system font may include modifying a font style from Italic to SimSun or modifying a display size of the font. Examples are not provided herein one by one.

1102: The terminal device invokes a card engine 40 to notify a system font change event. For example, the card engine 40 is invoked by using a callback function of the card engine 40, to notify the card engine 40 that a current system font changes.

1103: After receiving a notification of the font change event, the card engine 40 sends a message to notify a container component.

1104: The container component changes a font size of the container component based on content of the message. For example, the container component may modify the font size of the container component through scaling up or scaling down at an equal proportion based on a proportion of a font of an operating system to a font of the card.

1105: The container component notifies another adaptation component of a modification event by using a message.

Optionally, the message may include information such as a modified font and font size of the container component. In a possible implementation, the message may be a broadcast message. This is not limited in this embodiment of this application.

1106: After receiving the message from the container component, the another adaptation component completes modification of a font and a font size of the another component to adapt to a current style of the operating system.

The style of the flight status card 60 shown in FIG. 5(d) is used as an example. If the user modifies a system font on the mobile phone, fonts of texts in the title area, the content area, the statement area, and the operation area in the flight status card 60 are also correspondingly adjusted, or are scaled down or scaled up at an equal proportion.

A process of the foregoing method 1100 corresponds to the system 400 provided in the embodiment of this application, and may be a process of Step 1 to Step 6 shown in FIG. 12. Specifically, a JS file that is of a card and that is obtained by the card engine 40 includes a container component and another adaptation component module, and a process includes the following steps.

Step 1 and Step 2 correspond to 1101 in FIG. 11. A user modifies a system font of a terminal device, and a host application may listen to a change event of the system font.

Step 3 corresponds to 1102 in FIG. 11. The terminal device invokes the card engine 40 to send a system font modification event.

Step 4 corresponds to 1104 in FIG. 11. The container component modifies a font and the like of the container component.

Step 5 corresponds to 1105 in FIG. 11. The container component transfers the font modification event to the another adaptation component by using a message.

Step 6 corresponds to 1106 in FIG. 11. The another adaptation component receives the modification event and modifies a font and the like of the another component to adapt to a font obtained after the user currently modifies the font.

It should be understood that the another adaptation component in this embodiment of this application may include one or more components listed in Table 4, or more other adaptation components that are not listed. This is not limited in this embodiment of this application.

It should be further understood that, in addition to a scenario in which the user modifies the font, a font size, or the like of the terminal device, the method may be further applied to a scenario in which the user switches a language mode, for example, a process of switching a language from English to Chinese, or may be further applied to a scenario in which a language environment changes to a mirror language. The card style adjustment method provided in this embodiment of this application may be applied to a scenario in which a modification action of the user causes display of the system font, the font size, or the like to change.

By using the method described above, component standardization is performed on a plurality of components, and association adaptation between the card style and the style of the operating system can be implemented in a standard component. In a scenario in which the user modifies the system font or the card style, a font change of the terminal device is monitored by using the card engine, to synchronously modify a font of each component of the card engine, so as to synchronize the card style. In this process, a development burden and a task of a developer can be reduced. When the user manually modifies the system font, a process in which the developer continuously modifies styles of all components related to the card is avoided, and a problem that a card font is inconsistent with the system font or the like is avoided.

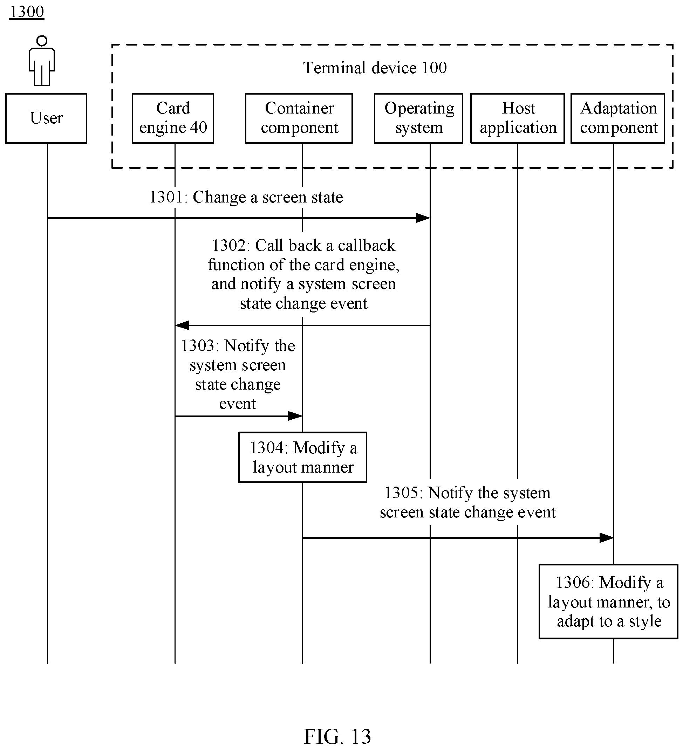

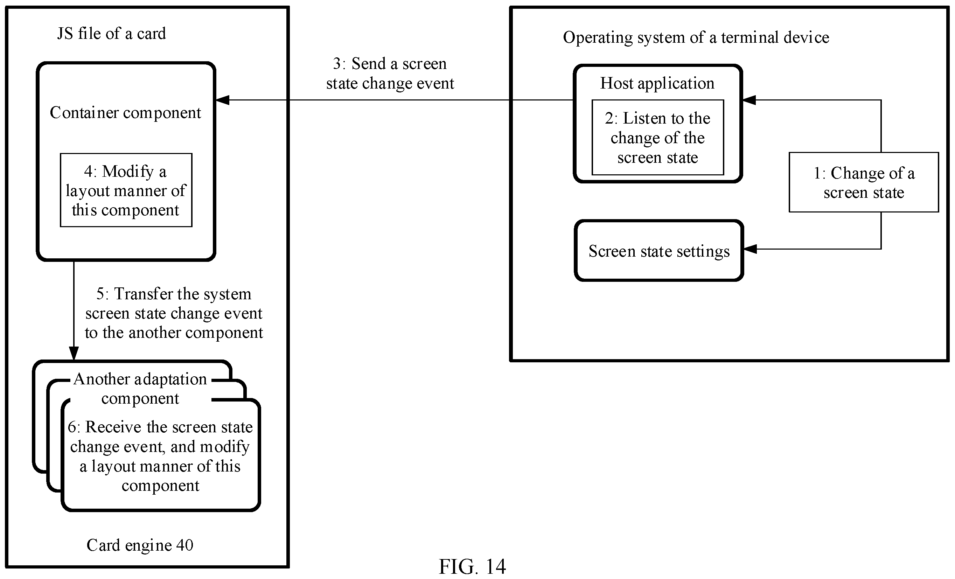

FIG. 13 and FIG. 14 are still other schematic flowcharts of adjusting a card style according to an embodiment of this application. The following uses a style of the flight status card 60 shown in FIG. 5(d) as an example to describe a process in which the flight status card 60 performs style adaptation in a scenario in which a screen state changes.

As shown in FIG. 13, the method includes the following steps.

1301: A user changes a screen state of a terminal device.

Optionally, the screen state of the terminal device may changes because the user makes a modification by using an entry, for example, a setting of a mobile phone. For example, the user sets that a mobile phone interface or the like is displayed in only a partial area on a large-screen mobile phone. Alternatively, the screen state of the terminal device may change spontaneously. For example, an acceleration sensor and a gravity sensor of a mobile phone detect that the mobile phone is flipped, to determine that a screen is switched between a landscape mode and a portrait mode. Alternatively, a screen state of a mobile phone with a foldable screen changes due to an unfolded state or a folded state of the mobile phone. A manner of changing the screen state of the terminal device is not limited in this embodiment of this application.

1302: The terminal device invokes a card engine 40 to notify a screen state change event. For example, the card engine 40 is invoked by using a callback function of the card engine 40, to notify the card engine 40 that a current screen state changes.

1303: After receiving a notification of the font change event, the card engine 40 sends a message to notify a container component.

1304: The container component changes a layout manner, for example, raster adaptation, of the container component based on content of the message.

1305: The container component notifies another adaptation component of the screen state change event by using a message.

Optionally, the message may include information such as the layout manner of the container component. In a possible implementation, the message may be a broadcast message. This is not limited in this embodiment of this application.

1306: After receiving the message from the container component, the another adaptation component modifies a layout manner of the another component to adapt to a current screen state.

The style of the flight status card 60 shown in FIG. 5(d) is used as an example. If the mobile phone switches from a portrait mode to a landscape mode, rasters of the title area, the content area, the statement area, and the operation area of the flight status card 60 are relaid out, for example, changed to flat display with a same width as the landscape mode. In addition, a font of display content on the flight status card 60 is correspondingly adjusted, or scaled down or scaled up at an equal proportion.

A process of the foregoing method 1300 corresponds to the system 400 provided in the embodiment of this application, and may be a process of Step 1 to Step 6 shown in FIG. 14. Specifically, a card file obtained by the card engine 40 includes a container component and another adaptation component module, and a process includes the following steps.

Step 1 and Step 2 correspond to 1301 in FIG. 13. A screen state of the terminal device changes, and a host application may listen to a screen state change event.

Step 3 corresponds to 1302 in FIG. 13. The terminal device invokes the card engine to send the screen state change event.

Step 4 corresponds to 1304 in FIG. 13. The container component modifies a layout manner and the like of the container component.

Step 5 corresponds to 1305 in FIG. 13. The container component transfers the screen state change event to another adaptation component by using a message.

Step 6 corresponds to 1306 in FIG. 13. The another adaptation component receives the screen state change event and modifies a layout manner and the like of the another adaptation component to adapt to a current screen state.

It should be understood that the another adaptation component in this embodiment of this application may include one or more components listed in Table 4, or more other adaptation components that are not listed. This is not limited in this embodiment of this application.

By using the method described above, component standardization is performed on a plurality of components, and association adaptation between the card style and a style of an operating system can be implemented in a standard component. In a scenario in which the screen state of the terminal device changes or is switched, the card engine listens to a screen state change of the terminal device, to synchronously modify a layout of each component of the card engine, so as to synchronize the card style. In this process, a development burden and a task of a developer can be reduced. When the screen state of the terminal device changes in any manner, a process in which the developer continuously modifies layouts of all components related to a card is avoided, and a problem that the card is inconsistent with a screen state or the like is avoided.

The foregoing uses the card layout component as an example to describe a process of implementing adaptive adjustment of the card style in a plurality of card layout components based on the style of the operating system, the screen state, and the like. In another possible implementation, this embodiment of this application provides an example of a card style for the developer, and the example of the card style provides a plurality of card styles for the developer. In this embodiment of this application, the following 14 style files shown in Table 5 are used as examples, and functions of each style file are listed below.

**Table 5**

| Style number | Style | Component corresponding to the style | Style description |
|---|---|---|---|
| 1 | Container style | Container component | Default style of the container component |
| 2 | Frame style | Frame component | Default style of the frame component |
| 3 | Tag style | Tag component | Default style of the tag component |
| 4 | Image style | Image component | Default style of the image component |
| 5 | Image_gallery style | Image_gallery component | Default style of the image_gallery component |
| 6 | Action style | Action component | Default style of the action component |
| 7 | Button style | Button component | Default style of the button component |
| 8 | Search style | Search component | Default style of the search component |
| 9 | List style | List component | Default style of the list component |
| 10 | Text style | Text component | Default style of the text component |
| 11 | Rate style | Rate component | Default style of the rate component |
| 12 | Basic style | Basic style | Define a variable based on the basic style |
| 13 | Spacing style | Spacing style | Element spacing style |
| 14 | Layout style | Layout style | Layout style |

Specifically, it can be learned from the examples of the 14 card style files listed in Table 5 that the 14 card style files may provide the following main functions.
1. Provide a conversion capability for a mirror layout.
   In an environment of a mirror language, mirror conversion is also implemented for a style. For example, in an Arabic country, when a language environment changes to the image language, a style layout may also be changed to a mirror layout.
2. Support unified update of each component style. After a component style is modified, all components that reference the style are changed to a new style in a unified manner.
3. The style may be adapted based on an operating system version. A new style may overwrite an original style, and a global style may overwrite a private style.

For the plurality of standard styles listed above, a plurality of sets of style files are separately generated from a plurality of dimensions such as a device type, a device version, the operating system version, and a component type. Each style file may adapt to at least one terminal device, or adapt to at least one device version, or adapt to one operating system version, or adapt to at least one component. This is not limited in this embodiment of this application.

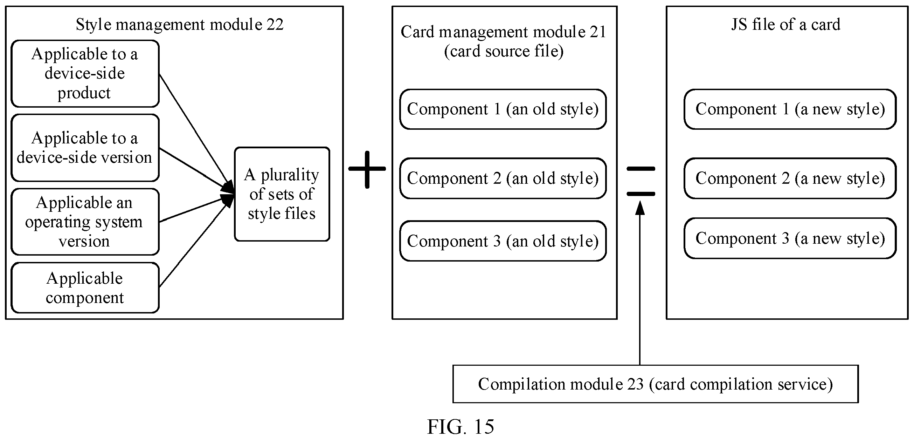

In a possible implementation, a new card execution file may be generated for different style files based on one set of card source files. FIG. 15 is a schematic diagram of a card file development process according to an embodiment of this application. As shown in FIG. 15, a style management module 22 generates a plurality of sets of style files based on a plurality of dimensions such as a device type, a device version, an operating system version, and a component type.

A card management module 21 stores a card source file (UX file). With reference to FIG. 3 and a composition structure of the card source file shown in Table 1 to Table 3, it can be learned that the card source file may include style files for different components, namely, a component 1, a component 2, a component 3, and the like shown in the card management module 21 in FIG. 15. The component 1, the component 2, and the component 3 each have an old style specified in the card source file. In addition, the old styles of the component 1, the component 2, and the component 3 may be the same or different.

When a user requests a card service, the card management module 21 may query, from the style management module 22, a style file suitable for current user equipment, a device version, an operating system version, and a component type, or the card management module 21 notifies the style management module 22 of information such as current user device, a device version, an operating system version, and a component type, and the card management module 21 selects an adapted style file, and returns the adapted style file to the card management module 21. The card management module 21 may invoke a compilation module 23 to recompile the card source file and the new style file, to obtain a new card file.

In the foregoing process, it may be understood that an old style file in the card source file is replaced with the new style file, and then recompilation is performed to obtain the new card file. The card file may adapt to the current user device, the device version, the operating system version, the component type, and the like, and provide the card service for the user after rendering.

Optionally, the style management module 22 may correspond to a function module in the card management platform 20 of the system 400 in FIG. 4. The card management module 21 may correspond to a function module in the card management platform 20 of the system 400 in FIG. 4, or may be a function module on a server side. The compilation module 23 may correspond to a function module in the card management platform 20 of the system 400 in FIG. 4, or may be a function module on the server side, or may be a function module of a terminal device of the user. This is not limited in this embodiment of this application.

It should be understood that, when the terminal device of the user requests the card service, when the card management module 21 queries the style management module 22 for the card service, cards may be filtered based on an attribute (for example, information such as the current device type, the device version, the operating system version, and the component type) dimension of the terminal device, and selects an adapted target style file from a plurality of style files. To be specific, a style file obtained through filtering may meet a requirement of the terminal device of the user on a card style.

According to the foregoing method, differentiated different style files may be recompiled with reference to the card source file based on the card source file, to generate cards of different styles, so as to meet differentiated requirements of different devices on card styles. It should be understood that, in this implementation, the developer first needs to host the card source file on the server side.

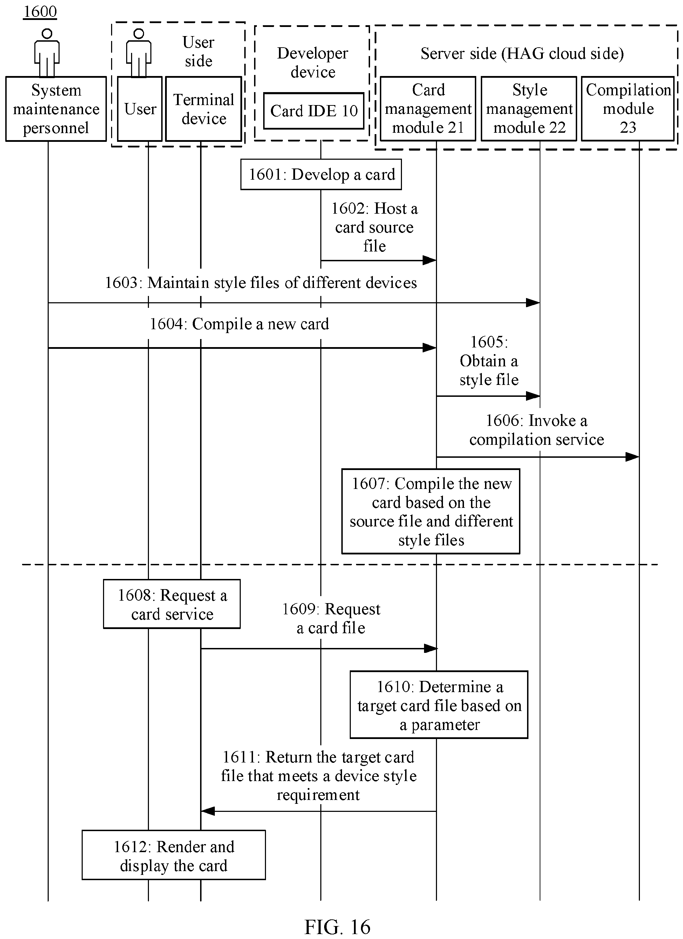

For the foregoing process, FIG. 16 is a schematic flowchart of still another method for adaptively generating a card style according to an embodiment of this application. The method describes a process of interaction between a user side, system maintenance personnel, a developer device side, and a server side. As shown in FIG. 16, the method 1600 includes the following steps.

1601: A card developer develops a card by using a card IDE 10.

Specifically, in a card development process, the standard component described in Table 4 and/or the standard style file described in Table 5 is used. After the card is developed, a card source file (UX file) is obtained, and a card file is obtained after compilation.

1602: Upload the card source file (UX file) to a card management module 21 for hosting. Optionally, in this process, both the card source file (UX) and the compiled card file may be uploaded.

1603: The system maintenance personnel maintain a plurality of style files based on information such as different device types, device versions, operating system versions, and component types.

Specifically, based on related descriptions in FIG. 15, the system maintenance personnel may develop a plurality of sets of style files based on a plurality of dimensions such as the device type, the device version, the operating system version, an application, an application version, and the component type, and upload the plurality of sets of style files to a style management module 22 for storage and management. Details are not described herein again.

1604: The system maintenance personnel request to compile a new card.

1605: The card management module 21 may obtain a new card style from the style management module 22 based on information such as a current user device, a device version, an operating system version, and a version of a service entry application. The new style file may meet a requirement of a terminal device of a user on a card style.

1606: The card management module 21 invokes a compilation service of a compilation module 23.

1607: The card management module 21 invokes, based on the card source file and the new style file, the compilation service to generate a card file, that is, a card execution file, for each style file.

1608: The user requests a card service by using the terminal device.

In a possible implementation, the terminal device may send an intent event to a server. Specifically, the intent event may include an active intent of the user and/or scenario information included in the card, and the like. The active intent of the user may be understood as that the user requests a card by using a specific operation. In this case, the terminal device may be triggered to send, to the server, a message for requesting a card file. Alternatively, the intent may include uncompleted time information that the user currently has and that is automatically matched by the terminal device. For example, when the terminal device detects that the user has at least one of an uncompleted trip, a meeting arrangement, or an event reminder, the terminal device may be triggered to send, to the server, a message for requesting a card file. 1609: The terminal device requests to obtain the card file.

1610: The card management module 21 determines a target card file based on current device parameter information. It should be understood that the device parameter information herein may include one or more types of information such as a device type, a device version, an operating system version, a component version, an application, and an application version.

1611: Return the target card file that meets a style requirement of the current terminal device.

1612: Render and display the target card file on the terminal device.

In the foregoing process of generating the card file, the plurality of sets of style files are generated based on the card source file and based on the plurality of dimensions such as the terminal device type, the device version, the operating system version, the application, the application version, and the component type. Then, a plurality of sets of different card files are compiled from one card source file based on the card source file and the plurality of sets of style files and by using a recompilation mechanism. Each card file is applicable to the terminal devices with the different style requirements. In the process in which the user requests the card service, different card distribution mechanisms are established for a same card service. The different card files can be distributed based on requirements such as the terminal device type, the device version, the operating system version, the application, the application version, and the component type, to adapt to the different terminal devices.

The foregoing process may be understood as that, in a card development process, the plurality of sets of different style files are recompiled with reference to the card source file based on the card source file, to generate cards of different styles, so as to meet differentiated requirements of different terminal devices on card styles. In addition, in this process, a development burden and a task of the developer can be reduced. For different terminal devices, different card styles can be adapted in a card development phase, to achieve objectives of one-time development and multi-terminal distribution, remove an obstacle to service ecosystem expansion, and improve flexibility of terminal device experience.

In another possible implementation, for the foregoing listed plurality of style files for a plurality of dimensions such as the different device types, device versions, operating system versions, and component types, an embodiment of this application further provides a method for dynamically loading a card style. A plurality of differentiated style files are automatically loaded in a card running process, to meet requirements of different terminal devices on card styles.

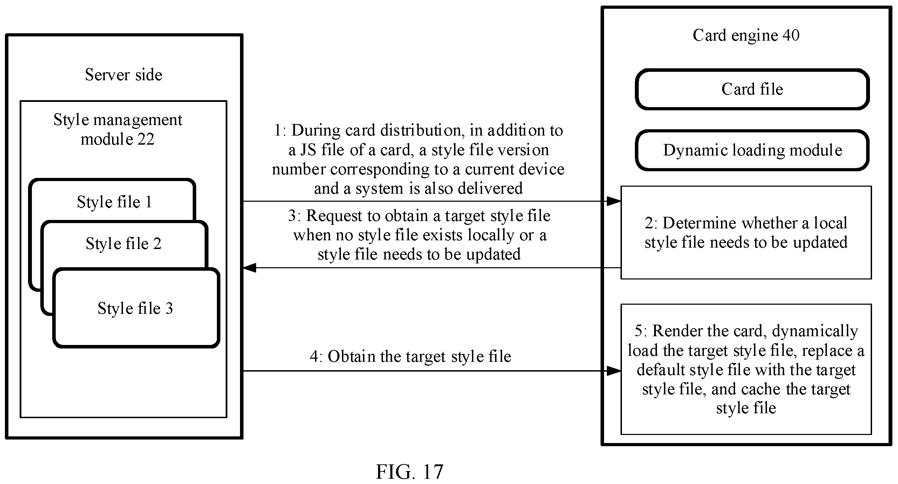

FIG. 17 is a schematic diagram of a running process of a card file according to an embodiment of this application. As shown in FIG. 17, a style management module 22 generates a plurality of sets of style files based on a plurality of dimensions such as a device type, a device version, an operating system version, and a component type, and uploads the plurality of sets of style files to a server side. The server side stores the plurality of sets of style files. Based on related descriptions in FIG. 4, the server side may be the card management platform 20 and/or the card distribution platform 30. This is not limited in this embodiment of this application.

It should be understood that, in this embodiment, in addition to the plurality of sets of style files, the server side further stores a compiled card file. The card file may be a plurality of card execution files compiled based on a card source file and the plurality of sets of style files. The process may be briefly described as the following steps.

Step 1: In a process in which a user requests a card service from the server side, when the server side distributes a card to a terminal device, in addition to distributing the card file, the server side also delivers a style file version number corresponding to a current device and an operating system.

Step 2: A card engine 40 queries a local style file based on the style file version number, and determines whether the local style file needs to be updated.

Step 3: When determining that no style file corresponding to the current device and the operating system exists locally or the style file version needs to be updated, the card engine 40 requests to obtain a target style file from the server side.

Step 4: The server side sends the target style file to the terminal device in response to the request of the terminal device.

Step 5: When the card engine 40 renders the card, a dynamic loading module may dynamically load the obtained target style file, replace an original style file with the target style file, and perform recompilation and card rendering, to present a card that meets a current requirement. The target style file is cached.

In the foregoing implementation process, the server side manages and maintains the plurality of sets of style files for a plurality of dimensions such as different device types, device versions, operating system versions, component versions, applications, and application versions. In a card rendering process, the card engine 40 may determine whether a local style file needs to be updated, request a new style file from a HAG side, and dynamically load the new style file during card rendering to complete a card compilation process, so as to overwrite an original style file with a latest style file of the card.

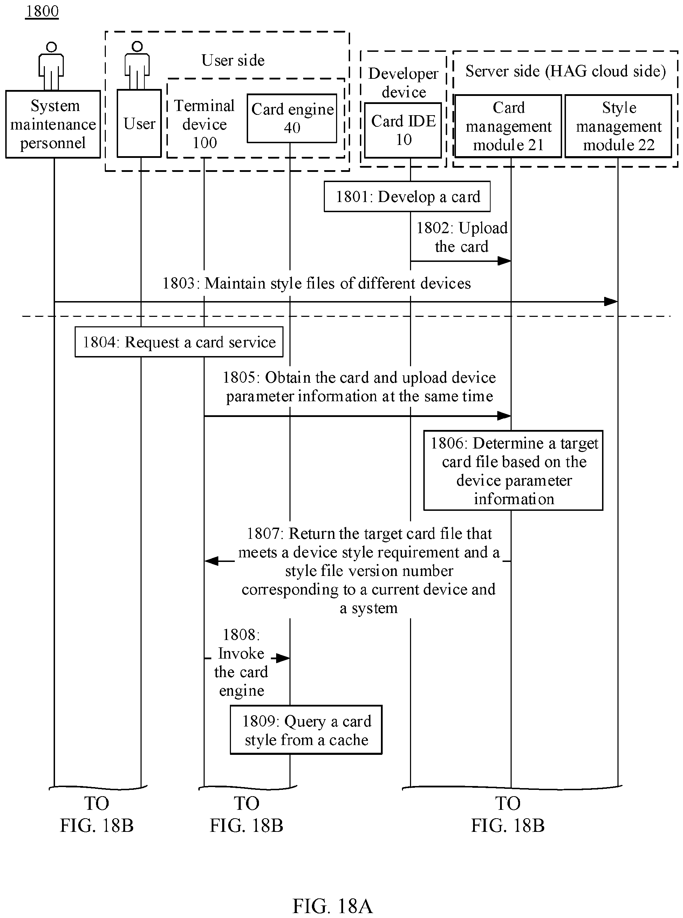

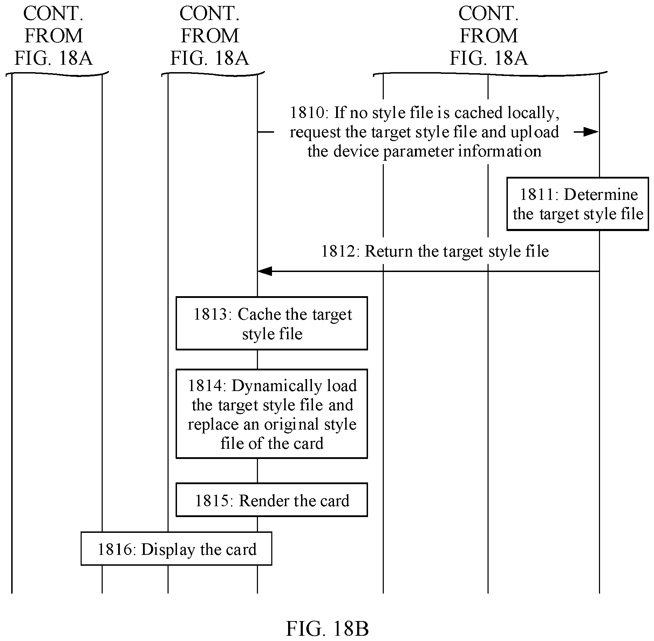

For the foregoing process, FIG. 18A and FIG. 18B are a schematic flowchart of still another method for adaptively generating a card style according to an embodiment of this application. The method describes a process of interaction between a user side, system maintenance personnel, a developer device side, and a server side.

As shown in FIG. 18A and FIG. 18B, the method 1800 includes the following steps.

1801: A card developer develops a card by using a card IDE 10. Specifically, in a card development process, the standard component described in Table 4 and/or the standard style file described in Table 5 may be used. After the card is developed, a card source file (UX file) is obtained, and a card file is obtained after compilation.

1802: Upload the card file to a card management module 21 for unified management. Optionally, this process is different from Step 1602 in FIG. 16. Only the compiled card file may be uploaded, and the card source file does not need to be hosted.

1803: The system maintenance personnel maintain a plurality of style files based on information such as different device types, device versions, operating system versions, and component types.

Specifically, the system maintenance personnel may develop a plurality of sets of style files based on a plurality of dimensions such as the device type, the device version, the operating system version, an application, an application version, and the component type, and upload the plurality of sets of style files to a style management module 22 for storage and management. Details are not described herein again.

1804: A user requests a card service by using a terminal device.

1805: The user obtains the card service on the terminal device, and the terminal device uploads device parameter information to a card management module 21. It should be understood that the device parameter information herein may include one or more types of information such as a device type, a device version, an operating system version, a component version, an application, and an application version.

1806: The card management module 21 determines a target card file based on device parameter information.

1807: The card management module 21 returns, to the terminal device, the target card file that meets a device style requirement and a style file version number corresponding to the current device and the system.

1808: The terminal device invokes a card engine 40 to render a card.

1809: The card engine 40 queries a local cache for the card style based on the style file version number.

1810: The card engine 40 determines that a style file corresponding to the style file version number is not cached locally, requests a target style file from the style management module 22, and uploads the device parameter information to the style management module 22.

1811: The style management module 22 determines a target style file based on the device parameter information.

1812: The style management module 22 returns the target style file to the card engine 40.

In a specific implementation process, when the terminal device invokes the card engine 40 to render the card file, recompilation is performed based on a target card file currently obtained from a server and a locally cached style file, a style module in the target card file is replaced with the locally cached style file, and the card is displayed to the user after recompilation.

It should be understood that Steps 1810 to 1812 are optional steps. A process of Steps 1810 to 1812 may be understood as a process of synchronously updating a style file of the terminal device and a style file of the server. The synchronous update process may be performed periodically. For example, the terminal device actively updates the style file with the server twice a month, and the terminal device may update the locally cached style file accordingly, so that when the terminal device requests the card service next time, the target card file obtained from the server and the latest locally cached style file are used for recompilation. Alternatively, the synchronous update process may be performed each time a quantity of times that the terminal device requests the card service from the server reaches 50. This is not limited in this embodiment of this application.

In conclusion, the style files of the terminal device are all obtained from the local cache. In addition, the locally cached style file can be updated at a specific frequency, and synchronized with that in the server. In this process, a quantity of times that the server sends the style file to the terminal device can be reduced, to reduce a delay. In addition, the target card file obtained from the server and the locally cached style file are first used to recompile and render the card, and then, if the style file is updated, recompile and render the card with reference to the target card file and a latest style file. This process can be implemented without user perception, and matching of a latest card style is implemented without user interaction, to improve user experience. 1813: The card engine 40 locally caches the target style file.

1814: The card engine 40 dynamically loads the target style file, and replaces an original style file of the card with the target style file for compilation.

1815: The card engine 40 performs rendering based on a compiled card file.

1816: Display a card to the user after card rendering is completed.

In the foregoing process of generating the card file, the plurality of sets of style files are generated based on the plurality of dimensions such as the terminal device type, the device version, the operating system version, the application, the application version, and the component type. Based on a card style caching mechanism, the card engine caches a target style file required by the device. If the corresponding target style file is not cached locally, the card engine can request to obtain the target style file from a HAG cloud side during card rendering. Then, the target style file is used to replace an original style file, and a card style that meets a current device and a system is presented to the user through recompilation and rendering. In this implementation process, the card engine can support the style file in being independent of the card file. During card loading, the target style file can be loaded to the card engine to replace an original style of the card and take effect.

It should be understood that the foregoing implementation process may be understood as dynamically loading, in a running process of the card, a style file that adapts to the current device and the system, and performing compilation, to meet differentiated requirements of different terminal devices on card styles. In addition, in this process, a development burden and a task of the developer can be reduced. For different terminal devices, different card styles can be adapted in a card development phase, to achieve objectives of one-time development and multi-terminal distribution, remove an obstacle to service ecosystem expansion, and improve flexibility of terminal device experience.

For all the embodiments described above, based on different implementation processes in a card development phase and a card running phase, the following is summarized.

### Card development phase

In the card development phase in an implementation process of the card service, embodiments of this application provide two examples of the card development process, for example, the example of the card layout component and the example of the style file.

The example of the card layout component defines the plurality of standard components used in card development. Each standard component can implement common functions such as a font, a font size, rasterization, style overwriting, and voice control, to meet requirements of different devices, different operating systems, and different display scenarios. The example of the style file defines a plurality of standard styles used in card development, providing standard support for subsequent adaptive adjustment of the card style.

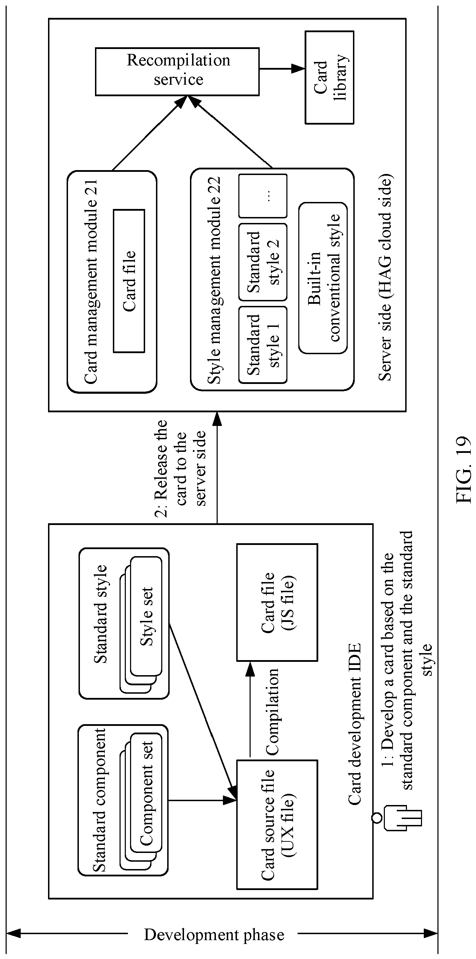

FIG. 19 is a schematic diagram of a card development process according to an embodiment of this application. Specifically, as shown in FIG. 19, in a card development phase, the following steps are included.

Step 1: A card developer develops a card based on an example of a card layout component and an example of a card style file.

Step 2: Release the card to a HAG side. For example, a compiled card file is uploaded to a card management module 21 on a HAG cloud side, and a plurality of style files in a standard style are uploaded to a style management module 22.

It should be understood that, in addition to the plurality of standard style examples provided in embodiments of this application, the style management module 22 may further include a built-in conventional style. For example, the plurality of standard style examples in this application include a standard style 1 of "SimSun 10.5 pt" for Huawei Mate 30 Pro, and the built-in conventional style includes a plurality of preset fonts such as "Calibri" and "Aharoni". When settings on leftmost screens of different users are different, the style management module 22 may be compatible with the plurality of provided standard style examples and the built-in conventional style, to determine a new style "Calibri 10.5 pt". This better meets a user requirement.

### Card running phase-Method 1

An embodiment of this application further provides a method for adaptively adjusting a card style. A card developer may host a card source file (UX file) on a server end (for example, a card management module 21 on a HAG cloud side).

In a card development process, differentiated style files are recompiled to the card source file to generate cards of different styles, to meet differentiated requirements of different devices on card styles, so that the cards are automatically adapted to different terminal devices or operating systems.

In a possible implementation, with reference to the descriptions in FIG. 15 and FIG. 16, the developer also hosts the card source file (UX file) on the card management module 21 on the HAG cloud side. The card management module 21 may invoke a compilation service to recompile the card source file and a new style file, to form new card libraries of different styles on the HAG cloud side.

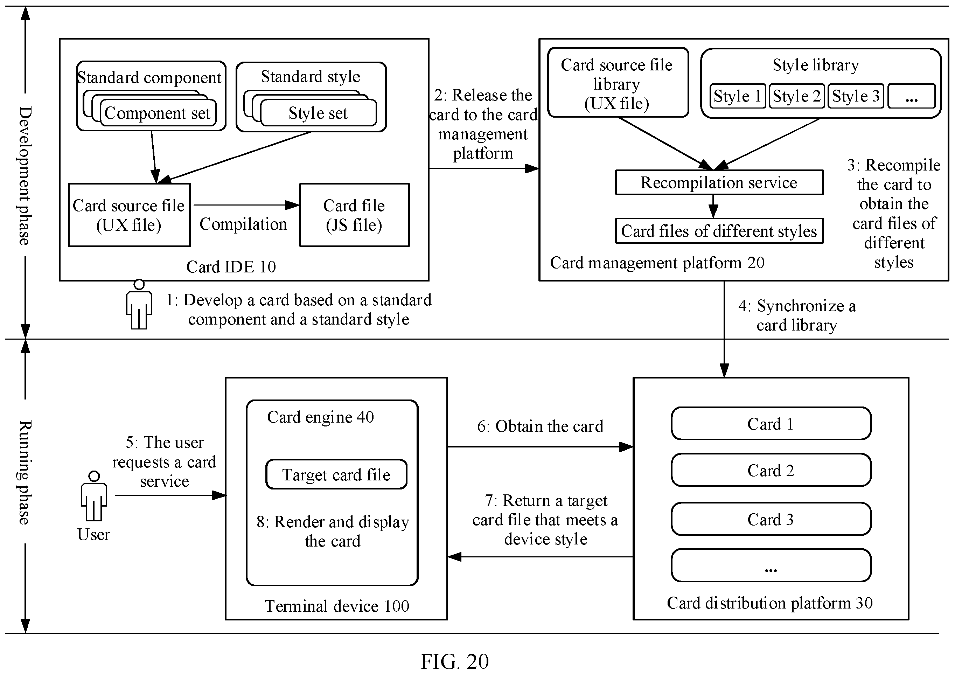

FIG. 20 is a schematic diagram of still another card development process according to an embodiment of this application. Specifically, as shown in FIG. 20, the following steps are included.

Step 1: A card developer develops a card based on an example of a card layout component and an example of a card style file.

Step 2: Release the card to a card management platform 20. For example, a compiled card file and the card source file (UX file) are uploaded to a card management module 21 on a server side, and a plurality of style files in a standard style are uploaded to a style management module 22.

Step 3: The card management platform performs recompilation based on the card source file and different style files, to obtain a plurality of card files of different styles.

Step 4: Synchronize a card library to a card distribution platform 30.

It should be understood that the card management platform 20 and the card distribution platform 30 may be collectively referred to as an HAG cloud side, and are distinguished herein to describe different functions. Optionally, the card management platform may include the foregoing card management module 21 and/or style management module 22. Execution herein may also be completed by the card management module 21. The card distribution platform may be alternatively a unit that is configured to deliver a card file and that is of the card management module 21.

Step 5: A user requests a card service.

Step 6: A terminal device requests to obtain the card from the HAG cloud side.

Step 7: The card distribution platform 30 determines, from the card library, a target card file that conforms to a device style, and returns the target card file to the terminal device.

Step 8: A card engine 40 renders and displays the card.

### Card running phase-Method 2

An embodiment of this application further provides a method for dynamically loading a card style. A card developer may upload a style file to a server end (for example, a style management module 22 on a server side or the like). In a card rendering process, a card engine 40 may automatically load differentiated style files to generate cards of different styles, to meet differentiated requirements of different devices on card styles, so that the cards are automatically adapted to different terminal devices or operating systems.

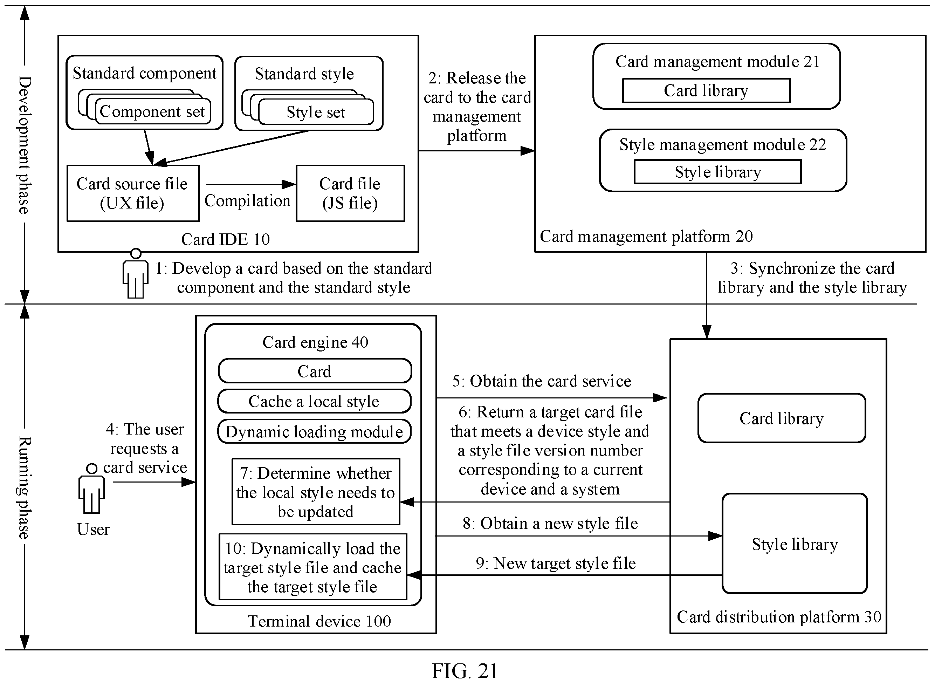

FIG. 21 is a schematic diagram of still another card style update mechanism according to an embodiment of this application. Different from that in the existing card update process shown in FIG. 3, in this embodiment of this application, in an implementation process of a card service, improvement is separately performed in two phases: a card development phase and a card running phase. The following is specifically included.

Specifically, as shown in FIG. 20, the following steps are included.

Step 1: A card developer develops a card based on an example of a card layout component and an example of a card style file.

Step 2: Release the card to a card management platform 20. For example, a card file is uploaded to a card management module 21, and a plurality of style files in the example of the card style file are uploaded to the style management module 22.

Step 3: Separately synchronize a card library and a style library to a card distribution platform 30.

Step 4: A user requests a card service.

Step 5: A terminal device requests to obtain the card from a HAG cloud side.

Step 6: The card distribution platform 30 determines, from the card library, a target card file that conforms to a device style, returns the target card file to the terminal device, and returns a style file version number corresponding to the current device and a system.

Step 7: A card engine 40 locally caches a card style, and determines, through query based on the style file version number, whether the local card style needs to be updated.

Step 8: When the card style needs to be updated, the card engine 40 requests, from the HAG cloud side, a target style file corresponding to current device parameter information.

Step 9: The card distribution platform 30 determines the target style file from the style library, and returns the target style file to the card engine 40.

Step 10: A dynamic loading module of the card engine 40 dynamically loads a new target style file to replace an original style, and renders and displays the card.

The foregoing is the plurality of methods for adaptively adjusting a card style provided in embodiments of this application. In the foregoing process, the developer can meet style requirements of different terminal devices and operating systems through one-time development, and does not need to pay attention to differentiated requirements of different devices and different systems on card style, to implement one-time development and multi-terminal distribution. According to the method, an obstacle to ecosystem expansion of a card service can be removed, a burden of a developer can be reduced, and flexibility of experience of a terminal product can be improved.

It may be understood that, to implement the foregoing functions, the terminal device includes corresponding hardware and/or software modules for performing the functions. Algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments, the terminal device may be divided into function modules based on the foregoing method examples, for example, each function module may be obtained through division based on each corresponding function, or two or more functions may be integrated into one processing module. The integrated module may be implemented in a form of hardware. It should be noted that, in embodiments, division into the modules is an example, is merely logical function division, and may be other division during actual implementation.

The terminal device provided in embodiments is configured to perform the foregoing card style generation method. When an integrated unit is used, the terminal device may include a processing module, a storage module, and a communication module. The processing module may be configured to control and manage actions of the terminal device, for example, may be configured to support the terminal device in performing steps performed by a display unit, a detection unit, and a processing unit. The storage module may be configured to support the terminal device in storing program code, data, and the like. The communication module may be configured to support communication between the terminal device and another device.

The processing module may be a processor or a controller. The processor may implement or execute various example logical blocks, modules, and circuits described with reference to content disclosed in this application. The processor may be alternatively a combination for implementing a computing function, for example, a combination including one or more microprocessors or a combination of a digital signal processor (digital signal processor, DSP) and a microprocessor. The storage module may be a memory. The communication module may be specifically a device that interacts with another terminal device, for example, a radio frequency circuit, a Bluetooth chip, or a Wi-Fi chip.

In an embodiment, when the processing module is a processor, and the storage module is a memory, the terminal device in this embodiment may be a device having the structure shown in FIG. 1.

An embodiment further provides a computer-readable storage medium. The computer-readable storage medium stores computer instructions. When the computer instructions are run on a terminal device, the terminal device is enabled to perform the foregoing related method steps, to implement the method for adaptively generating a card style in the foregoing embodiments.

An embodiment further provides a computer program product. When the computer program product runs on a computer, the computer is enabled to perform the foregoing related steps, to implement the method for adaptively generating a card style in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the method for adaptively generating a card style in the foregoing method embodiments.

The terminal device, the computer-readable storage medium, the computer program product or the chip provided in embodiments is configured to perform the corresponding method provided above. Therefore, for beneficial effects that can be achieved, refer to the beneficial effects of the corresponding method provided above. Details are not described herein again.

Based on descriptions of the foregoing implementations, a person skilled in the art may understand that, for the purpose of convenient and brief descriptions, division into the foregoing function modules is merely used as an example for description. In actual application, the foregoing functions can be allocated to different function modules and implemented based on a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A card generation method, applied to a system comprising an electronic device and a server, wherein the server stores a source file of one or more cards, and the method comprises:
sending, by the electronic device, a request message of a first card file to the server, wherein the request message of the first card file comprises identification information of a first card and parameter information of the electronic device;
determining, by the server, a source file of the first card based on the identification information of the first card, and determining a target style file from one or more card style files based on the parameter information of the electronic device;
generating, by the server, the first card file based on the source file of the first card and the target style file;
sending, by the server, the first card file to the electronic device; and
displaying, by the electronic device, the first card based on the first card file.

2. The method according to claim 1, wherein when the electronic device detects an operation of invoking the first card by a user, the electronic device sends the request message of the first card file to the server; or
when the electronic device matches a preset scenario, the electronic device sends the request message of the first card file to the server, and the preset scenario comprises at least one of a to-be-completed trip of a user, a meeting arrangement, and an event reminder.

3. The method according to claim 1 or 2, wherein the first card file comprises a root component and one or more adaptation components, and the displaying, by the electronic device, the first card based on the first card file comprises:
obtaining, by the root component, a style of a first application corresponding to the first card and a style of an operating system of the electronic device;
determining, by the root component, a component style rule of the root component based on the style of the first application and the style of the operating system of the electronic device, wherein the component style rule comprises at least one of a font, a font size, and a raster layout of the root component;
notifying, by the root component, the one or more adaptation components of the style of the first application and the style of the operating system of the electronic device;
modifying, by each of the one or more adaptation components, a component style rule based on the style of the first application and the style of the operating system of the electronic device, wherein the component style rule comprises at least one of a font, a font size, and a raster layout of each adaptation component; and
displaying the first card according to the component style rule of the root component and the component style rule of each of the one or more adaptation components.

4. The method according to any one of claims 1 to 3, wherein the first card file comprises the root component and the one or more adaptation components, and when a state of the electronic device changes, the method further comprises:
obtaining, by the root component, a state change event of the electronic device, wherein the state change event of the electronic device comprises a system font change and/or a screen state change of the electronic device;
modifying, by the root component, the component style rule of the root component based on the state change event of the electronic device, wherein the component style rule comprises the at least one of the font, the font size, and the raster layout of the root component;
notifying, by the root component, the one or more adaptation components of the state change event of the electronic device; and
modifying, by each of the one or more adaptation components, the component style rule based on the state change event of the electronic device, wherein the component style rule comprises the at least one of the font, the font size, and the raster layout of each adaptation component.

5. The method according to claim 3 or 4, wherein the root component is a container component, and the adaptation component is one or more of an image component, an image gallery component, a layout component, a tag component, a switch component, a button component, a search component, a list component, a text box component, and a rate component.

6. The method according to any one of claims 1 to 5, wherein the server stores one or more card style files;
each of the one or more card style files corresponds to at least one type of electronic device; and/or
each of the one or more card style files corresponds to an electronic device of at least one version; and/or
each of the one or more card style files corresponds to at least one operating system version; and/or
each of the one or more card style files corresponds to at least one application version.

7. The method according to any one of claims 1 to 6, wherein the source file of the card is a UX file, and the first card file is a JS file obtained after the UX file and the target style file are compiled.

8. The method according to any one of claims 1 to 7, wherein the parameter information of the electronic device comprises at least one of the following information:
type information of the electronic device, version information of the electronic device, operating system version information of the electronic device, and application version information corresponding to a card service request.

9. A card generation method, applied to a system comprising an electronic device and a server, wherein the method comprises:
sending, by the electronic device, a request message of a first card file to the server, wherein the request message of the first card file comprises identification information of a first card and parameter information of the electronic device;
determining, by the server, the first card file based on identification information of the first card file, and determining, by the server, a version of a target style file of the electronic device based on the parameter information of the electronic device;
sending, by the server, the first card file and version information of the target style file to the electronic device; and
displaying, by the electronic device, the first card based on the first card file and a first style file, wherein the first style file is a style file stored in the electronic device.

10. The method according to claim 9, wherein the method further comprises:
sending, by the electronic device to the server, a second request message used to request to update the first style file;
sending, by the server, a second style file to the electronic device based on the second request message; and
storing, by the electronic device, the second style file.

11. The method according to claim 10, wherein the sending, by the electronic device to the server, a second request message used to request to update the first style file comprises:
periodically sending, by the electronic device to the server, the second request message used to request to update the first style file.

12. The method according to any one of claims 9 to 11, wherein when the electronic device detects an operation of invoking the first card by a user, the electronic device sends the request message of the first card file to the server; or
when the electronic device matches a preset scenario, the electronic device sends the request message of the first card file to the server, and the preset scenario comprises at least one of a to-be-completed trip of a user, a meeting arrangement, and an event reminder.

13. The method according to any one of claims 9 to 12, wherein the first card file is a JS file, the JS file comprises a template part, a style part, and a script part, and the displaying, by the electronic device, the first card based on the first card file and a first style file comprises:
replacing, by the electronic device, the style part in the first card file by using the first style file, to obtain a second card file through compilation; and
displaying, by the electronic device, the first card based on the second card file.

14. The method according to claim 13, wherein the second card file comprises a root component and one or more adaptation components, and the displaying, by the electronic device, the first card based on the second card file comprises:
obtaining, by the root component, a style of a first application corresponding to the first card and a style of an operating system of the electronic device;
determining, by the root component, a component style rule of the root component based on the style of the first application and the style of the operating system of the electronic device, wherein the component style rule comprises at least one of a font, a font size, and a raster layout of the root component;
notifying, by the root component, the one or more adaptation components of the style of the first application and the style of the operating system of the electronic device;
modifying, by each of the one or more adaptation components, a component style rule based on the style of the first application and the style of the operating system of the electronic device, wherein the component style rule comprises at least one of a font, a font size, and a raster layout of each adaptation component; and
displaying the first card according to the component style rule of the root component and the component style rule of each of the one or more adaptation components.

15. The method according to claim 13 or 14, wherein the second card file comprises the root component and the one or more adaptation components, and when a state of the electronic device changes, the method further comprises:
obtaining, by the root component, a state change event of the electronic device, wherein the state change event of the electronic device comprises a system font change and/or a screen state change of the electronic device;
modifying, by the root component, the component style rule of the root component based on the state change event of the electronic device, wherein the component style rule comprises the at least one of the font, the font size, and the raster layout of the root component;
notifying, by the root component, the one or more adaptation components of the state change event of the electronic device; and
modifying, by each of the one or more adaptation components, the component style rule based on the state change event of the electronic device, wherein the component style rule comprises the at least one of the font, the font size, and the raster layout of each adaptation component.

16. The method according to claim 14 or 15, wherein the root component is a container component, and the adaptation component is one or more of an image component, an image gallery component, a layout component, a tag component, a switch component, a button component, a search component, a list component, a text box component, and a rate component.

17. The method according to any one of claims 9 to 16, wherein the server stores one or more card style files;
each of the one or more card style files corresponds to at least one type of electronic device; and/or
each of the one or more card style files corresponds to an electronic device of at least one version; and/or
each of the one or more card style files corresponds to at least one operating system version; and/or
each of the one or more card style files corresponds to at least one application version.

18. The method according to any one of claims 9 to 17, wherein the parameter information of the electronic device comprises at least one of the following information:
type information of the electronic device, version information of the electronic device, operating system version information of the electronic device, and application version information corresponding to a card service request.

19. A card generation method, applied to a system comprising a first electronic device, a second electronic device, and a server, wherein the first electronic device and the second electronic device are of different types, the server stores a source file of a first card, and the method comprises:
sending, by the first electronic device, a first request message of a first card file to the server, wherein the first request message comprises identification information of the first card and parameter information of the first electronic device;
sending, by the second electronic device, a second request message of the first card file to the server, wherein the first request message comprises the identification information of the first card and parameter information of the second electronic device;
determining, by the server, the source file of the first card based on the identification information of the first card, determining a first target style file from one or more card style files based on the parameter information of the first electronic device, and determining a second target style file from one or more card style files based on the parameter information of the second electronic device;
generating, by the server, the first card file based on the source file of the first card and the first target style file, and sending the first card file to the first electronic device;
generating, by the server, a second card file based on the source file of the first card and the second target style file, and sending the second card file to the second electronic device; and
displaying, by the first electronic device based on the first card file, the first card having a first style, and displaying, by the second electronic device based on the second card file, the first card having a second style.

20. The method according to claim 19, wherein the first style and the second style are the same or different.

21. The method according to claim 19 or 20, wherein a display area of the first card having the first style comprises one or more of a title area, a content area, an operation area, and a statement area, and a display area of the first card having the second style comprises one or more of a title area, a content area, an operation area, and a statement area.

22. The method according to any one of claims 19 to 21, wherein when detecting an operation of invoking the first card by a user, the first electronic device sends the first request message of the first card file to the server; or
when identifying a preset scenario, the first electronic device sends the first request message of the first card file to the server, wherein the preset scenario comprises at least one of a to-be-completed trip of a user, a meeting arrangement, and an event reminder; and
when detecting the operation of invoking the first card by the user, the second electronic device sends the second request message of the first card file to the server; or
when identifying the preset scenario, the second electronic device sends the second request message of the first card file to the server, wherein the preset scenario comprises the at least one of the to-be-completed trip of the user, the meeting arrangement, and the event reminder.

23. The method according to any one of claims 19 to 22, wherein the server stores one or more card style files;
each of the one or more card style files corresponds to at least one type of electronic device; and/or
each of the one or more card style files corresponds to an electronic device of at least one version; and/or
each of the one or more card style files corresponds to at least one operating system version; and/or
each of the one or more card style files corresponds to at least one application version.

24. The method according to any one of claims 19 to 23, wherein the source file of the first card is a UX file, and the first card file is a JS file obtained after the UX file and a target style file are compiled.

25. The method according to any one of claims 19 to 24, wherein the parameter information of the first electronic device comprises at least one of the following information:
type information of the first electronic device, version information of the first electronic device, operating system version information of the first electronic device, and application version information corresponding to a card service request; and
the parameter information of the second electronic device comprises at least one of the following information:
type information of the second electronic device, version information of the second electronic device, operating system version information of the second electronic device, and the application version information corresponding to the card service request.

26. An electronic device, wherein the electronic device is configured to:
send a request message of a first card file to a server, wherein the request message of the first card file comprises identification information of a first card and parameter information of the electronic device;
receive the first card file sent by the server, wherein the first card file is generated by the server based on a source file of the first card and a target style file, the source file of the first card is determined by the server based on the identification information of the first card, and the target style file is determined by the server from one or more card style files based on the parameter information of the electronic device; and
display the first card based on the first card file.

27. The electronic device according to claim 26, wherein when detecting an operation of invoking the first card by a user, the electronic device sends the request message of the first card file to the server; or
when matching a preset scenario, the electronic device sends the request message of the first card file to the server, and the preset scenario comprises at least one of a to-be-completed trip of a user, a meeting arrangement, and an event reminder.

28. The electronic device according to claim 26 or 27, wherein the first card file comprises a root component and one or more adaptation components, and that the electronic device displays the first card based on the first card file comprises:
the root component obtains a style of a first application corresponding to the first card and a style of an operating system of the electronic device;
the root component determines a component style rule of the root component based on the style of the first application and the style of the operating system of the electronic device, wherein the component style rule comprises at least one of a font, a font size, and a raster layout of the root component;
the root component notifies the one or more adaptation components of the style of the first application and the style of the operating system of the electronic device;
each of the one or more adaptation components modifies a component style rule based on the style of the first application and the style of the operating system of the electronic device, wherein the component style rule comprises at least one of a font, a font size, and a raster layout of each adaptation component; and
the electronic device displays the first card according to the component style rule of the root component and the component style rule of each of the one or more adaptation components.

29. The electronic device according to any one of claims 26 to 28, wherein the first card file comprises the root component and the one or more adaptation components, and when a state of the electronic device changes,
the root component obtains a state change event of the electronic device, wherein the state change event of the electronic device comprises a system font change and/or a screen state change of the electronic device;
the root component modifies the component style rule of the root component based on the state change event of the electronic device, wherein the component style rule comprises the at least one of the font, the font size, and the raster layout of the root component;
the root component notifies the one or more adaptation components of the state change event of the electronic device; and
each of the one or more adaptation components modifies the component style rule based on the state change event of the electronic device, wherein the component style rule comprises the at least one of the font, the font size, and the raster layout of each adaptation component.

30. The electronic device according to claim 28 or 29, wherein the root component is a container component, and the adaptation component is one or more of an image component, an image gallery component, a layout component, a tag component, a switch component, a button component, a search component, a list component, a text box component, and a rate component.

31. The electronic device according to any one of claims 26 to 30, wherein the source file of the card is a UX file, and the first card file is a JS file obtained after the UX file and the target style file are compiled.

32. The electronic device according to any one of claims 26 to 31, wherein the parameter information of the electronic device comprises at least one of the following information:
type information of the electronic device, version information of the electronic device, operating system version information of the electronic device, and application version information corresponding to a card service request.

33. An electronic device, wherein the electronic device is configured to:
send a request message of a first card file to a server, wherein the request message of the first card file comprises identification information of a first card and parameter information of the electronic device; and
display the first card based on the first card file and a first style file, wherein the first style file is a style file stored in the electronic device, and the first card file is determined by the server based on identification information of the first card file.

34. The electronic device according to claim 33, wherein the electronic device is further configured to:
send, to the server, a second request message used to request to update the first style file; and
receive a second style file sent by the server, and store the second style file.

35. The electronic device according to claim 34, wherein that the electronic device sends, to the server, a second request message used to request to update the first style file comprises:
the electronic device periodically sends, to the server, the second request message used to request to update the first style file.

36. The electronic device according to any one of claims 33 to 35, wherein when the electronic device detects an operation of invoking the first card by a user, the electronic device sends the request message of the first card file to the server; or
when the electronic device matches a preset scenario, the electronic device sends the request message of the first card file to the server, and the preset scenario comprises at least one of a to-be-completed trip of a user, a meeting arrangement, and an event reminder.

37. The electronic device according to any one of claims 33 to 36, wherein the first card file is a JS file, the JS file comprises a template part, a style part, and a script part, and the electronic device is further configured to:
replace the style part in the first card file by using the first style file, to obtain a second card file through compilation; and
display the first card based on the second card file.

38. The electronic device according to claim 37, wherein the second card file comprises a root component and one or more adaptation components, and the electronic device displays the first card based on the second card file comprises:
the root component obtains a style of a first application corresponding to the first card and a style of an operating system of the electronic device;
the root component determines a component style rule of the root component based on the style of the first application and the style of the operating system of the electronic device, wherein the component style rule comprises at least one of a font, a font size, and a raster layout of the root component;
the root component notifies the one or more adaptation components of the style of the first application and the style of the operating system of the electronic device;
each of the one or more adaptation components modifies a component style rule based on the style of the first application and the style of the operating system of the electronic device, wherein the component style rule comprises at least one of a font, a font size, and a raster layout of each adaptation component; and
the electronic device displays the first card according to the component style rule of the root component and the component style rule of each of the one or more adaptation components.

39. The electronic device according to claim 37 or 38, wherein the second card file comprises the root component and the one or more adaptation components, and when a state of the electronic device changes,
the root component obtains a state change event of the electronic device, wherein the state change event of the electronic device comprises a system font change and/or a screen state change of the electronic device;
the root component modifies the component style rule of the root component based on the state change event of the electronic device, wherein the component style rule comprises the at least one of the font, the font size, and the raster layout of the root component;
the root component notifies the one or more adaptation components of the state change event of the electronic device; and
each of the one or more adaptation components modifies the component style rule based on the state change event of the electronic device, wherein the component style rule comprises the at least one of the font, the font size, and the raster layout of each adaptation component.

40. The electronic device according to claim 38 or 39, wherein the root component is a container component, and the adaptation component is one or more of an image component, an image gallery component, a layout component, a tag component, a switch component, a button component, a search component, a list component, a text box component, and a rate component.

41. The electronic device according to any one of claims 33 to 40, wherein the parameter information of the electronic device comprises at least one of the following information:
type information of the electronic device, version information of the electronic device, operating system version information of the electronic device, and application version information corresponding to a card service request.

42. A server, comprising:
a card management module, configured to store a source file of one or more cards; and
a style management module, configured to store one or more card style files, wherein
the card management module is further configured to: receive a request message that is of a first card file and that is sent by an electronic device, wherein the request message of the first card file comprises identification information of a first card and parameter information of the electronic device;
determine a source file of the first card based on the identification information of the first card, and determine a target style file from the one or more card style files based on the parameter information of the electronic device;
generate the first card file based on the source file of the first card and the target style file; and
send the first card file to the electronic device.

43. The server according to claim 42, wherein
each of the one or more card style files corresponds to at least one type of electronic device; and/or
each of the one or more card style files corresponds to an electronic device of at least one version; and/or
each of the one or more card style files corresponds to at least one operating system version; and/or
each of the one or more card style files corresponds to at least one application version.

44. The server according to claim 42 or 43, wherein the source file of the card is a UX file, and the first card file is a JS file obtained after the UX file and the target style file are compiled.

45. The server according to any one of claims 42 to 44, wherein the parameter information of the electronic device comprises at least one of the following information:
type information of the electronic device, version information of the electronic device, operating system version information of the electronic device, and application version information corresponding to a card service request.

46. A server, comprising:
a card management module, configured to store a source file of one or more cards; and
a style management module, configured to store one or more card style files, wherein
the card management module is further configured to: receive a request message that is of a first card file and that is sent by an electronic device, wherein the request message of the first card file comprises identification information of a first card and parameter information of the electronic device;
determine the first card file based on identification information of the first card file, and determine a version of a target style file of the electronic device based on the parameter information of the electronic device; and
the server sends the first card file and version information of the target style file to the electronic device.

47. The server according to claim 46, wherein the card management module is further configured to:
receive a second request message that is used to request to update a first style file and that is sent by the electronic device; and
send a second style file to the electronic device based on the second request message.

48. The server according to claim 47, wherein the card management module is further configured to:
periodically receive the second request message that is used to request to update the first style file and that is sent by the electronic device.

49. The server according to any one of claims 46 to 48, wherein the first card file is a JS file, and the JS file comprises a template part, a style part, and a script part.

50. The server according to claim 49, wherein the second card file comprises a root component and one or more adaptation components, the root component is a container component, and the adaptation component is one or more of an image component, an image gallery component, a layout component, a tag component, a switch component, a button component, a search component, a list component, a text box component, and a rate component.

51. The server according to any one of claims 46 to 50, wherein
each of the one or more card style files corresponds to at least one type of electronic device; and/or
each of the one or more card style files corresponds to an electronic device of at least one version; and/or
each of the one or more card style files corresponds to at least one operating system version; and/or
each of the one or more card style files corresponds to at least one application version.

52. The server according to any one of claims 46 to 51, wherein the parameter information of the electronic device comprises at least one of the following information:
type information of the electronic device, version information of the electronic device, operating system version information of the electronic device, and application version information corresponding to a card service request.

53. An electronic device, comprising:
one or more processors;
one or more memories; and
a module on which a plurality of applications are installed, wherein
the memory stores one or more programs, and when the one or more programs are executed by the processor, the electronic device is enabled to perform the method according to any one of claims 1 to 25 performed by the electronic device.

54. A server, comprising a processor, a memory, and an interface, wherein
the processor, the memory, and the interface cooperate with each other, so that the server performs the method according to any one of claims 1 to 25 performed by the server.

55. A computer-readable storage medium, wherein the computer-readable storage medium stores computer instructions, and when the computer instructions are run on an electronic device or a server, the method according to any one of claims 1 to 25 is performed.
